# EUROPEAN PATENT APPLICATION

(11) **EP 4 620 713 A1**
(43) Date of publication of application: **24.09.2025**
(21) Application number: 23911574.4
(22) Date of filing: 05.12.2023
(51) Int. Cl.: B60K 35/215

(54) **METER PANEL UNIT, INFORMATION DISPLAY SYSTEM AND WORK VEHICLE**

(30) Priority: 26.12.2022 JP 2022208207; 26.12.2022 JP 2022208212; 26.12.2022 JP 2022208213
(71) Applicant: Kubota Corporation, Osaka 556-8601 (JP)
(72) Inventor: SASAKI, Wataru, Sakai-shi, Osaka 590-0908 (JP); HASHIMOTO, Ryo, Sakai-shi, Osaka 590-0908 (JP); KAECHI, Shuya, Sakai-shi, Osaka 590-0908 (JP); YASUNOBE, Daisuke, Sakai-shi, Osaka 590-0908 (JP)
(74) Representative: Cabinet Beau de Loménie
(86) International application number: PCT/JP2023/043436
(87) International publication number: WO 2024/142793

(57) **Abstract**

An information display system includes a meter panel unit for a work vehicle, and a control device is configured to control the meter panel unit. The meter panel unit includes a meter portion having a first analog meter and a second analog meter each having a pointer, and a display element provided between the first and second analog meters, a wall surface part provided on a display surface side of the meter portion, and surrounding the first and second analog meters and the display element, a transparent cover opposite a display surface of the meter portion, and arc-shaped indicators positioned around sweep ranges of the respective pointers. Each of the arc-shaped indicators has at least one light emitting region positioned in the shape of an arc. The control device causes the display element to display a curved line-shaped image on an extension line of the arc.

## Description

### TECHNICAL FIELD

The present disclosure relates to meter panel units, information display systems, and work vehicles.

### BACKGROUND ART

Research and development of smart agriculture that uses information and communication technology (ICT) and the Internet of things (IoT), as the nextgeneration agriculture, is under way. Automated and unmanned operations of agricultural machines such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, the load state of an engine, and the state of each protion of a work vehicle is provided in front of the operator's seat of an agricultural machine (work vehicle) such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of works outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

There is an increased demand for such a meter panel not only for agricultural machines but also construction machines that are used in work in construction sites. Agricultural machines and construction machines that can travel are hereinafter collectively referred to as "work vehicles."

The present disclosure provides meter panel units that can solve such a problem, and work vehicles including such meter panel units.

### SOLUTION TO PROBLEM

The present disclosure provides solutions described in the following aspects.

### [Item A1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion;
arc-shaped indicators positioned around sweep ranges of the respective pointers; and
facing plates positioned outward of the respective arc-shaped indicators, wherein
each of the arc-shaped indicators has at least one light emitting region positioned between the sweep range of the respective pointer and the respective facing plate.

### [Item A2]

The meter panel unit of Item A1, wherein
the arc-shaped indicator has one or more light emitting regions in which light beams with different colors are emitted.

### [Item A3]

The meter panel unit of Item A1 or A2, wherein
each of the arc-shaped indicators and each of the facing plates are provided on the respective one of both sides of the display element, and
the arc-shaped indicators and the facing plates are positioned outward of a region interposed between a straight line forming a boundary between the first analog meter and the display element and a straight line forming a boundary between the second analog meter and the display element.

### [Item A4]

An information display system comprising:
the meter panel unit of Item A2 or A3; and
a control device configured to control the meter panel unit,
   wherein
the control device causes the arc-shaped indicator to display information before causing the display element to display information during starting of the work vehicle.

### [Item A5]

The information display system of Item A4, wherein
the information has a content indicating a state of the work vehicle.

### [Item A6]

The information display system of Item A5, wherein
the control device changes a color of light according to a content of the information.

### [Item A7]

The information display system of Item A6, wherein
the control device changes the color of the light to red when a state of the work vehicle is classified as being abnormal for travel or work.

### [Item A8]

A work vehicle comprising:
the meter panel unit of any one of Items A1 to A3.

### [Item A9]

A work vehicle comprising:
the information display system of any one of Items A4 to A7.

### [Item B1]

An information display system comprising:
a meter panel unit for a work vehicle; and
a control device configured to control the meter panel unit,
   wherein
the meter panel unit includes
   a meter portion having a first analog meter and a second analog meter each having a pointer, and a display element provided between the first and second analog meters,
   a wall surface part provided on a display surface side of the meter portion, and surrounding the first and second analog meters and the display element,
   a transparent cover opposite a display surface of the meter portion, and
   arc-shaped indicators positioned around sweep ranges of the respective pointers,
each of the arc-shaped indicators has at least one light emitting region positioned in a shape of an arc, and
the control device causes the display element to display a curved lineshaped image on an extension line of the arc.

### [Item B2]

The information display system of Item B1, comprising:
facing plates positioned outward of the respective arc-shaped indicators.

### [Item B3]

The information display system of Item B1 or B2, wherein
the control device causes the display element to display a curved lineshaped image on an extension line of the arc shape using light with a same color as that of light emitted from the plurality of light emitting regions.

### [Item B4]

The information display system of Item B1 or B2, wherein
the control device is configured to synchronize changes in luminance of an image displayed on the display element with a flicker of light emitted from the light emitting region.

### [Item B5]

The information display system of Item B1 or B2, wherein
each of the arc-shaped indicators is provided on the respective one of both sides of the display element, and
the control device causes the display element to display a straight line portion connected to an arc with a same center as that of the arc shape and parallel with a straight line forming a boundary between the first analog meter and the display element and a straight line forming a boundary between the second analog meter and the display element.

### [Item B6]

A work vehicle comprising:
the information display system of any one of Items B1 to B5.

### [Item C1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion;
arc-shaped indicators positioned around sweep ranges of the respective pointers; and
facing plates positioned outward of the respective arc-shaped indicators, wherein
each of the arc-shaped indicators has a light emitting region positioned between the sweep range of the respective pointer and the respective facing plate, and
each of the facing plates has a reflective surface configured to reflect light emitted from the light emitting region toward an operator of the work vehicle.

### [Item C2]

The meter panel unit of Item C1, wherein
a height of the facing plate from the meter portion is greatest at a lateral position with respect to a middle portion of the arc-shaped indicator, and decreases toward both ends of the facing plate along the arc-shaped indicator.

### [Item C3]

The meter panel unit of Item C2, wherein
a greatest value of the height is at least 30 mm.

### [Item C4]

The meter panel unit of Item C3, wherein
the wall surface part has a visor region positioned above the analog meters and the display element with the wall surface part attached to the work vehicle, and a height of the visor region from the meter portion is at least 40 mm.

### [Item C5]

The meter panel unit of Item C2, wherein
the wall surface part has a visor region positioned above the analog meters and the display element with the wall surface part attached to the work vehicle, and a height of the visor region from the meter portion is greater than a height of the facing plate from the meter portion.

### [Item C6]

The meter panel unit of Item C4 or C5, wherein
with the meter panel unit attached to the work vehicle, the transparent cover is tilted toward the operator of the work vehicle as viewed from a normal direction of the meter portion.

### [Item C7]

A work vehicle comprising:
the meter panel unit of any one of Items C1 to C6.

### [Item D1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion;
arc-shaped indicators positioned around sweep ranges of the respective pointers; and
facing plates positioned outward of the respective arc-shaped indicators, wherein
each of the arc-shaped indicators has at least one light emitting region positioned between the sweep range of the respective pointer and the respective facing plate, and
each analog meter has an arc-shaped scale between the respective arc-shaped indicator and the sweep range of the respective pointer.

### [Item D2]

The meter panel unit of Item D1, wherein
each of the arc-shaped indicators and each of the facing plates are provided on the respective one of both sides of the display element, and
the arc-shaped indicators and the facing plates are positioned outward of a region interposed between a straight line forming a boundary between the first analog meter and the display element and a straight line forming a boundary between the second analog meter and the display element.

### [Item D3]

The meter panel unit of Item D1, wherein
the scale is a raised scale protruding from the display surface.

### [Item D4]

The meter panel unit of Item D3, wherein
the wall surface part, the facing plates, and the scale are integrally formed of a resin.

### [Item D5]

The meter panel unit of Item D4, wherein
the scale has a plurality of notches positioned at predetermined intervals.

### [Item D6]

A work vehicle comprising:
the meter panel unit of any one of Items D1 to D5.

### [Item D7]

A meter panel unit for a work vehicle, comprising:
a meter portion having a first analog meter having a first pointer, a second analog meter having second and third pointers, and a display element provided between the first and second analog meters;
a wall surface part provided on a display surface side of the meter portion, and surrounding the first and second analog meters and the display element;
a transparent cover opposite a display surface of the meter portion;
a first arc-shaped indicator positioned around a sweep range of the first pointer;
a second arc-shaped indicator positioned around a sweep range of the second and third pointers; and
a pair of facing plates positioned outward of the first and second arc-shaped indicators, respectively,
   wherein
each of the first and second arc-shaped indicators has at least one light emitting region positioned between the sweep range of the respective pointer and the respective facing plate, and
an outer shape of a movement range of the second pointer and an outer shape of a movement range of the third pointer are similar or congruent to each other.

### [Item D8]

The meter panel unit of Item D7, wherein
the outer shape forming a shape of the movement range of the second pointer and the outer shape forming a shape of the movement range of the third pointer are vertically symmetric.

### [Item D9]

The meter panel unit of Item D7, wherein
the movement range of the second pointer and the movement range of the third pointer have such a shape and size that the movement ranges match each other when one of the movement ranges is translated in a vertical direction.

### [Item D10]

The meter panel unit of any one of Items D7 to D9, wherein
the second pointer indicates a remaining amount of fuel of the work vehicle, and
the third pointer indicates a temperature of engine cooling water of the work vehicle.

### [Item E1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion;
arc-shaped indicators positioned around sweep ranges of the respective pointers; and
facing plates positioned outward of the respective arc-shaped indicators, wherein
each analog meter has an arc-shaped scale between the respective arc-shaped indicator and the sweep range of the respective pointer, and
each of the facing plates has a plurality of protrusions protruding toward the sweep range of the respective pointer, and the plurality of protrusions are provided at positions aligned with the scales.

### [Item E2]

The meter panel unit of Item E1, wherein
the arc-shaped indicator has at least one light emitting region positioned between the sweep range of the pointer and the facing plate, and
the plurality of protrusions of the respective facing plate extend across a respective one of spaces between the light emitting regions.

### [Item E3]

The meter panel unit of Item E1, wherein
the scale is a raised scale protruding from the display surface.

### [Item E4]

The meter panel unit of Item E3, wherein
the plurality of protrusions connect the facing plate to the raised scale.

### [Item E5]

The meter panel unit of Item E4, wherein
the wall surface part, the facing plates, and the raised scale are integrally formed of a resin.

### [Item E6]

The meter panel unit of Item E4, wherein
a plurality of protrusions form boundaries between the light emitting regions in the arc-shaped indicator.

### [Item E7]

A work vehicle comprising:
the meter panel unit of any one of Items E1 to E6.

### [Item F1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element; and
a transparent cover opposite a display surface of the meter portion, wherein
the wall surface part has a visor region positioned above the analog meters and the display element with the meter panel unit attached to the work vehicle, and
the transparent cover has a concave surface.

### [Item F2]

The meter panel unit of Item F1, wherein
the transparent cover has a front surface section including the concave surface, and a side surface section extending from the front surface section along an outer side of the wall surface part.

### [Item F3]

The meter panel unit of Item F2, wherein
the side surface section of the transparent cover covers an outer side of the wall surface part around an entire periphery thereof.

### [Item F4]

The meter panel unit of Item F1, wherein
with the meter panel unit attached to the work vehicle, the transparent cover is tilted toward an operator of the work vehicle as viewed from a normal direction of the meter portion.

### [Item F5]

The meter panel unit of Item F1, wherein
the concave surface of the transparent cover has a uniform curvature in each of a horizontal direction and a vertical direction orthogonal to the horizontal direction.

### [Item F6]

The meter panel unit of any one of Items F1 to F5, wherein
a height of the visor region from the meter portion is at least 40 mm.

### [Item F7]

A work vehicle comprising:
the meter panel unit of any one of Items F1 to F6.

### [Item G1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
an indicator region in which a plurality of indicators are positioned,
   wherein
the plurality of indicators includes a group of indicators to each of which two light emitting devices are assigned.

### [Item G2]

The meter panel unit of Item G1, wherein
the indicator region has two separate portions, and
the group of indicators is positioned in one of the two separate portions, and a second group of indicators to each of which a single light emitting device is assigned are positioned in the other separate portion.

### [Item G3]

The meter panel unit of Item G2, wherein
the group of indicators includes an indicator with a relatively large size, and the second group of indicators includes an indicator with a relatively small size.

### [Item G4]

A work vehicle comprising:
the meter panel unit of any one of Items G1 to G3.

### [Item G5]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
an indicator region provided below the display element,
   wherein
the indicator region provided below the display element has two portions separated from each other in a horizontal direction.

### [Item G6]

The meter panel unit of Item G5, comprising:
a second indicator region provided above the display element.

### [Item G7]

The meter panel unit of Item G6, wherein
a warning level of information indicated by an indicator positioned in the second indicator region is higher than a warning level of information indicated by an indicator positioned in the indicator region.

### [Item G8]

The meter panel unit of Item G7, wherein
the indicator region includes an empty region in which an indicator is not positioned, in a vicinity of a boundary between the two portions.

### [Item G9]

The meter panel unit of Item G8, wherein
the empty region is provided so as to extend across the boundary between the two portions.

### [Item G10]

A work vehicle comprising:
the meter panel unit of any one of Items G5 to G9.

### [Item H1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
an illuminance sensor provided below the display element.

### [Item H2]

The meter panel unit of Item H1, wherein
the wall surface part has a visor region positioned above the analog meters and the display element with the meter panel unit attached to the work vehicle.

### [Item H3]

The meter panel unit of Item H1, wherein
a non-light-emitting region with a horizontal width of at least 5 mm is provided on either side of the illuminance sensor.

### [Item H4]

The meter panel unit of Item H1, comprising:
arc-shaped indicators positioned around sweep ranges of the respective pointers; and
facing plates positioned outward of the respective arc-shaped indicators, wherein
each of the arc-shaped indicators has at least one light emitting region positioned between the sweep range of the respective pointer and the respective facing plate, and
the meter panel unit is configured to change a brightness of the light emitting region of each of the arc-shaped indicators according to an output from the illuminance sensor.

### [Item H5]

The meter panel unit of Item H1, wherein
the meter panel unit is configured to change the brightness of the display element according to an output from the illuminance sensor.

### [Item H6]

A work vehicle comprising:
the meter panel unit of any one of Items H1 to H5.

### [Item H7]

A work vehicle comprising:
a meter panel unit;
a headlamp; and
a control device configured to control an on/off state of the headlamp, wherein
the meter panel unit includes
   a meter portion having a first analog meter and a second analog meter each having a pointer, and a display element provided between the first and second analog meters;
   a wall surface part provided on a display surface side of the meter portion, and surrounding the first and second analog meters and the display element;
   a transparent cover opposite a display surface of the meter portion; and
   an illuminance sensor, and
the control device is configured to change a brightness of the headlamp according to an output from the illuminance sensor.

### [Item H8]

The work vehicle of Item H7, wherein
the illuminance sensor is provided below the display element.

### [Item H9]

The work vehicle of Item H7 or H8, comprising:
a work lamp,
   wherein
the control device is further configured to change a brightness of the work lamp according to the output from the illuminance sensor.

### [Item H10]

The work vehicle of Item H9, wherein
the control device causes the display element to display a warning message that prompts an operator to turn off the headlamp and/or work lamp according to the output from the illuminance sensor.

### [Item I1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
a rear cover positioned on a back surface side of the meter portion, wherein
the rear cover has at least one back surface connector with a connection direction tilted from a normal direction of the rear cover.

### [Item I2]

The meter panel unit of Item I1, wherein
the at least one back surface connector is a connector configured to be connected to a camera cable, and a connection direction of the connector is orthogonal to a normal direction.

### [Item I3]

The meter panel unit of Item I2, comprising:
a cap configured to block a connection portion of the at least one back surface connector,
   wherein
the rear cover is provided with a retention tether configured to connect the cap to the rear cover.

### [Item I4]

The meter panel unit of Item I3, wherein
the cap is a rubber cap in the shape of a rib, and
the retention tether is a rubber strap.

### [Item I5]

The meter panel unit of Item I3, wherein
the rear cover is configured to be fitted with the transparent cover, and
the retention tether is fixed to a fitting portion at which the rear cover is fitted with the transparent cover.

### [Item I6]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
a rear cover positioned on a back surface side of the meter portion, wherein
the rear cover has a binding section configured to bind up a plurality of wire harnesses.

### [Item I7]

The meter panel unit of Item I6, wherein
the binding section is positioned at a center portion of the rear cover.

### [Item I8]

The meter panel unit of Item I6, wherein
the rear cover and the binding section are integrally formed of a resin material.

### [Item I9]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
a rear cover positioned on a back surface side of the meter portion, wherein
the rear cover has at least one fixing section having a bolt hole into which a bolt to fix the transparent cover is inserted, and
the at least one fixing section is positioned within a frame with a circumscribed rectangle that touches an outer shape of the meter panel unit.

### [Item I10]

The meter panel unit of Item I9, wherein
the at least one fixing section includes four fixing sections protruding toward the four corners of the circumscribed rectangle.

### [Item I11]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
a rear cover positioned on a back surface side of the meter portion, wherein
the rear cover has a surface including at least three protrusions protruding toward a back surface side, and
tips of the at least three protrusions are positioned on a same plane, and configured to provide a predetermined space between the plane and the surface.

### [Item I12]

The meter panel unit of Item I11, wherein
the rear cover and the protrusions are integrally formed of a resin material.

### [Item I13]

The meter panel unit of Item I11, wherein
at least one electronic component is mounted on the surface of the rear cover, and
a clearance of the predetermined space is greater than a height of the at least one electronic component.

### [Item I14]

A work vehicle comprising:
the meter panel unit of any one of Items I1 to I13.

### [Item J1]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion;
a rear cover positioned on a back surface side of the meter portion: and
a decorative ring provided along an edge of the transparent cover, wherein
the decorative ring is fixed to the rear cover with the decorative ring on the transparent cover.

### [Item J2]

The meter panel unit of Item J1, wherein
the decorative ring has a front surface plated with a metal.

### [Item J3]

The meter panel unit of Item J1, wherein
the rear cover has at least one fixing section having a bolt hole into which a bolt to fix the decorative ring is inserted.

### [Item J4]

The meter panel unit of Item J3, wherein
the at least one fixing section is positioned within a frame with a circumscribed rectangle that touches an outer shape of the meter panel unit.

### [Item J5]

The meter panel unit of Item J4, wherein
the at least one fixing section includes four fixing sections protruding toward the four corners of the circumscribed rectangle.

### [Item J6]

A meter panel unit for a work vehicle, comprising:
a meter portion having a first analog meter and a second analog meter each having a pointer, and a display element provided between the first and second analog meters;
a wall surface part provided on a display surface side of the meter portion, and surrounding the first and second analog meters and the display element;
a transparent cover opposite a display surface of the meter portion; and
a rear cover positioned on a back surface side of the meter portion, wherein
the rear cover has at least two fixing sections having a bolt hole into which a bolt to fix the transparent cover is inserted, and
the bolt hole of one of the at least two fixing sections has a size and a shape different from a size and a shape of the bolt holes of the other fixing sections.

### [Item J7]

The meter panel unit of Item J6, wherein
the bolt hole of one of the at least two fixing sections has a size greater than that of the bolt in a predetermined direction, and the bolt holes of the other fixing sections have a size that fits a size of the bolt.

### [Item J8]

The meter panel unit of Item J6, wherein
the at least two fixing sections include four fixing sections protruding toward the four corners of the circumscribed rectangle that touches an outer shape of the meter panel unit, and
the bolt hole of one of the four fixing sections has an elliptical shape, and the bolt holes of the remaining three fixing sections have a circular shape.

### [Item J9]

A work vehicle comprising:
the meter panel unit of any one of Items J1 to J8.

General or specific aspects of the present disclosure may be implemented using a device, system, method, integrated circuit, computer program, nontransitory computer-readable storage medium, or any combination thereof. The computer-readable storage medium may be inclusive of volatile and non-volatile storage media. A device may include a plurality of devices. In the case in which a device includes two or more devices, the two or more devices may be provided in a single apparatus, or separately arranged in two or more different apparatuses.

### ADVANTAGEOUS EFFECTS OF INVENTION

According to an embodiment of the present disclosure, meter panel units each capable of displaying various kinds of information required during agricultural work with high visibility, and a vehicles including such meter panel units, are provided.

### BRIEF DESCRIPTION OF DRAWINGS

FIG. **1A** is a side view schematically illustrating a work vehicle according to an embodiment of the present disclosure.
FIG. **1B** is a front view schematically illustrating a meter panel unit when attached behind a steering wheel positioned in front of an operator's seat of a work vehicle, in an embodiment of the present disclosure.
FIG. **2** is a front view illustrating an example arrangement of main components of the meter panel unit of this embodiment.
FIG. **3** is a perspective view illustrating an example configuration of a wall surface part of the meter panel unit of this embodiment.
FIG. **4** is a front view illustrating an example configuration of a transparent cover of the meter panel unit of this embodiment.
FIG. **5** is a front view illustrating an example arrangement of an indicator of the meter panel unit of this embodiment.
FIG. **6A** is a front view illustrating an example state in which various kinds of information are displayed on a display element of the meter panel unit of this embodiment.
FIG. **6B** is a schematic diagram illustrating an example configuration of an indicator in this embodiment.
FIG. **6C** is a schematic diagram illustrating another example configuration of an indicator in this embodiment.
**7A** is a front view illustrating a detailed configuration of the meter panel unit of this embodiment.
FIG. **7B** is a cross-sectional view taken along line **B-B** of FIG. **7A****.**
FIG. **7C** is a cross-sectional view taken along line **C-C** of FIG. **7A****.**
FIG. **7D** is a cross-sectional view taken along line **D-D** of FIG. **7A****.**
FIG. **8** is a perspective view of the meter panel unit of this embodiment.
FIG. **9** is a perspective view of an analog meter of a meter panel unit of this embodiment.
FIG. **10** is a front view illustrating a positional relationship between a first analog meter, an arc-shaped indicator, and a facing plate.
FIG. **11** is a front view illustrating an example configuration of an arc-shaped indicator.
FIG. **12** is a cross-sectional view taken along line **IV-IV** of FIG. **10****.**
FIG. **13** is a front view illustrating a second analog meter and a second arc-shaped indicator.
FIG. **14** is a block diagram schematically illustrating an example configuration of an information display system in an embodiment of the present disclosure.
FIG. **15** is a front view schematically illustrating an example in which an arc having the same color as that of light emitted from a light emitting region of an arc-shaped indicator is displayed.
FIG. **16** is a front view schematically illustrating an example in which an arc having the same color as that of light emitted from a light emitting region of an arc-shaped indicator, and a second object having another shape and having an arc having the same color, are displayed.
FIG. **17** is a perspective view schematically illustrating an example decorative ring of the meter panel unit of this embodiment.
FIG. **18** is a perspective view illustrating a back surface part of a meter panel unit of this embodiment.
FIG. **19** is another perspective view illustrating a back surface part of a meter panel unit of this embodiment.

### DESCRIPTION OF EMBODIMENTS

A meter panel unit according to an embodiment of the present disclosure will be described below with reference to the accompanying drawings. It should be noted that like reference signs refer to like parts throughout the several views.

The embodiment described below is exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

As used herein, the term "parallel" with respect to two straight lines, sides, surfaces, or the like is intended to encompass some angular deviations from absolute parallelism between the two straight lines, sides, surfaces, or the like that are in the range of 0 to 5° unless otherwise specified. As used herein, the term "perpendicular" or "orthogonal" with respect to two straight lines, sides, surfaces, or the like is intended to encompass some angular deviations from absolute perpendicularity or orthogonality (90°) between the two straight lines, sides, surfaces, or the like that are in the range of ±5° unless otherwise specified. The angle between two straight lines, sides, surfaces, or the like has a positive value, but not a negative value, unless otherwise specified.

### <Overall configuration of work vehicle>

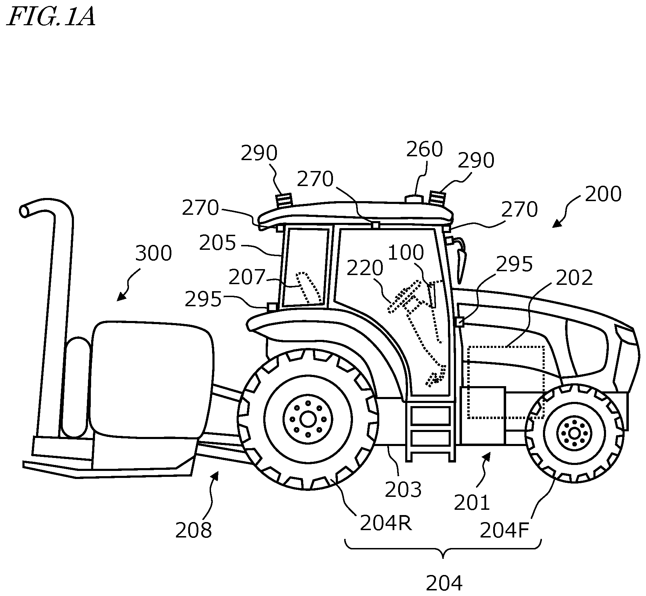

FIG. **1A** is a side view schematically illustrating an example work vehicle **200** according to this embodiment. The illustrated work vehicle **200** is a tractor that tows an implement (replaceable work equipment) **300.**

The work vehicle **200** of FIG. **1A** includes a vehicle body **201,** a prime mover (engine) **202,** and a transmission **203.** The vehicle body **201** is provided with a travel device including tire-mounted wheels **204,** and a cabin **205.** The travel device includes four wheels **204,** axles for rotating the four wheels, and brakes for slowing or stopping the axles. The wheels **204** of this example include a pair of front wheels **204F** and a pair of rear wheels **204R.** One or both of the front wheel **204F** and the rear wheel **204R** may be replaced by a plurality of wheels to which a continuous track is attached (crawler) instead of a tire-mounted wheel.

In the cabin **205,** a meter panel unit **100** according to an embodiment of the present disclosure, an operator's seat **207,** a steering wheel **220,** and switches for operations are provided.

The work vehicle **200** of FIG. **1A** is provided with a plurality of external sensors to sense surroundings of the work vehicle **200.** The external sensors may include various kinds of sensors such as a plurality of cameras **270,** a plurality of obstacle sensors **295,** and a plurality of LiDAR sensors **290.** The cameras **270** may, for example, be provided on the front, rear, left, and right sides of the work vehicle **200.** Each camera **270** captures an image of an environment around the work vehicle **200,** and generates image data. Images obtained by the cameras **270** may, for example, be transmitted to a terminal device for remote monitoring. The cameras **270** are optionally provided, and the number thereof is not particularly limited. The LiDAR sensor **290** is an example external sensor to output sensor data indicating a distribution of objects present in an environment around the work vehicle **200.** In the example of FIG. **1A****,** two LiDAR sensors **290** are provided at an upper front portion and an upper rear portion of the cabin 205. The LiDAR sensors **290** may be provided at other positions (e.g., a lower portion of a front surface of the vehicle body **201).** Each LiDAR sensor **290** repeatedly outputs sensor data indicating distances to and directions of measurement points of objects existing in a surrounding environment, or the three-dimensional coordinate values of the measurement points, while the work vehicle **200** is traveling. The number of LiDAR sensors **290** is not limited to two and may be one or at least three. In the example of FIG. **1A****,** the plurality of obstacle sensors **295** are provided at a front portion and a rear portion of the cabin **205.** The obstacle sensors **295** may be positioned at other positions. The obstacle sensors **295** may include a laser scanner or ultrasonic sonar, for example.

The work vehicle **200** further includes a GNSS unit **260.** GNSS collectively refers to satellite-based positioning systems, such as the global positioning system (GPS), the quasi-zenith satellite system (QZSS, for example, Michibiki), GLONASS, Galileo, and BeiDou. The GNSS unit **110** receives satellite signals transmitted from a plurality of GNSS satellites (also referred to as GNSS signals), and performs positioning based on the satellite signals. Although the GNSS unit **260** is provided at an upper portion of the cabin **205,** the GNSS unit **260** may be provided at other positions.

The engine **202** may, for example, be a diesel engine. An electric motor may be used instead of a diesel engine. The transmission **203** is capable of changing the propelling force and movement speed of the work vehicle **200** by changing gear ratios. The transmission **203** is also capable of allowing the work vehicle **200** to switch between forward movement and rearward movement.

A connecting device **208** is provided at a rear portion of the vehicle body **201.** The connecting device **208** includes, for example, a three-point support device (also referred to as a "three-point linkage" or "three-point hitch"), a power take-off (PTO) shaft, a universal joint, and a communication cable. The connecting device **108** can be used to removably connect an implement **300** to the work vehicle **200.** The connecting device **108** can change the position or orientation of the implement **300** by raising or lowering the three-point linkage using, for example, a hydraulic device. In addition, power can be transmitted from the work vehicle **200** to the implement **300** through the universal joint. While towing the implement **300,** the work vehicle **200** allows the implement **300** to perform predetermined work. A connecting device may also be provided at a front portion of the vehicle body **201.** In that case, an implement can be connected in front of the work vehicle **200.**

Although the implement **300** of FIG. **1A** is, for example, a sprayer for spraying a chemical agent to crop, the implement **300** is not limited to sprayers. For example, any kind of implement **300** such as a mower, seeder, spreader, rake implement, baler, harvester, plough, harrow, or rotary tiller may be connected to the work vehicle **200** for use.

Thus, the work vehicle **200,** which is used in smart agriculture, is equipped with various sensors, and performs various kinds of work together with the implement **300.** During such work, it is necessary to give the operator various kinds of information about a travel state and a work state. Therefore, information that should be displayed on the meter panel unit **100** may significantly vary depending on the kind and phase of work.

It should be noted that the work vehicle **200,** such as a tractor, may be configured to travel by manual driving, automatic steering, or automatic driving.

### <Overall configuration of meter panel unit>

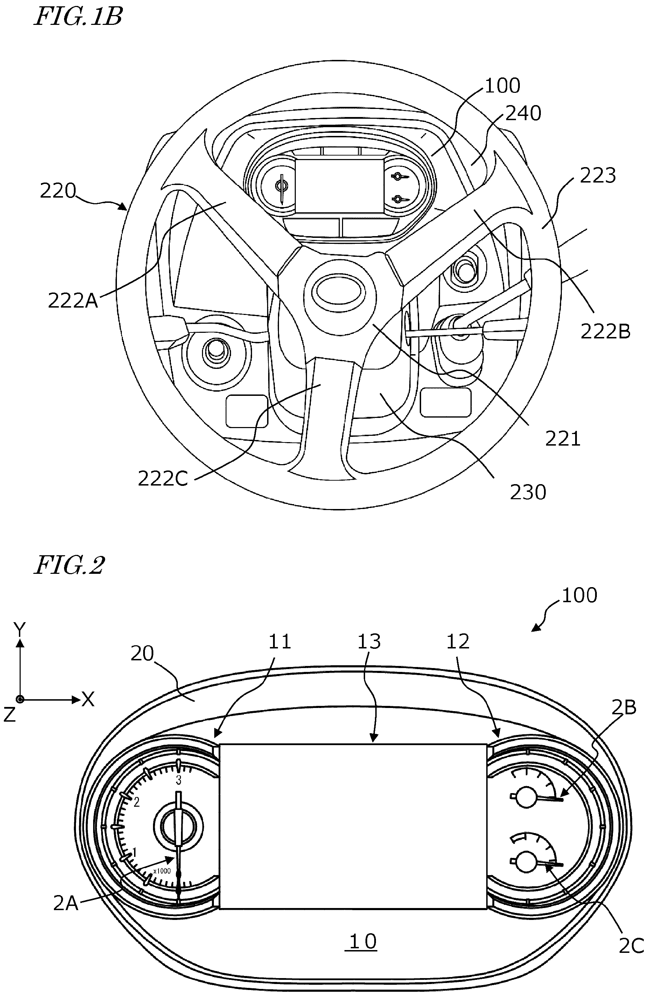

FIG. **1B** is a front view schematically illustrating the meter panel unit **100** when the meter panel unit **100 is attached to a** tractor, which is an example work vehicle, in an embodiment of the present disclosure. In the example illustrated in FIG. **1B****,** the meter panel unit **100** is positioned on the front side of the operator's seat of the tractor. Specifically, the meter panel unit **100** is positioned above a steering column (steering wheel stay) **230** that supports the steering wheel **220** in a manner that allows the steering wheel **220** to rotate, and is fitted into an opening of a meter cover **240.** In this example, the steering wheel **220** has a central hub (horn cover) **221,** three spokes **222A, 222B,** and **222C** radially extending from the horn cover **221,** and a rim **223** supported by the spokes **222A, 222B,** and **222C.** The meter panel unit **100** is provided at a position that allows the operator sitting on the operator's seat to see the meter panel unit **100.** In the example of FIG. **1B****,** various kinds of information displayed on the meter panel unit **100** can be seen through an opening between the spokes **222A** and **222B.**

The meter panel unit **100** is required to have excellent visibility. In particular, in the case of movable work vehicles capable of performing automatic steering or automatic driving, various kinds of information that are not displayed on general passenger cars need to be displayed during various kinds of agricultural work. For the meter panel unit **100,** having such a feature, the visibility is preferably improved so as to avoid overlooking more important information of various kinds of information. In addition, in the case in which the meter panel unit **100** is mounted on various work vehicles, it is desirable that the meter panel unit **100** have a structure that allows easy attachment. As described below, the meter panel unit **100** of this embodiment has excellent visibility and is easy to attach.

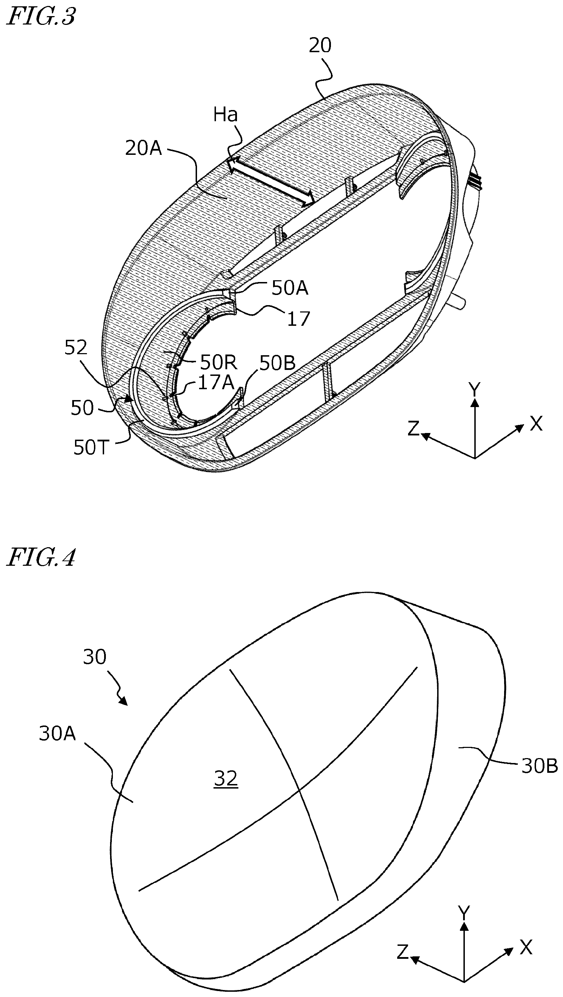

An overall configuration of the meter panel unit **100** will be described below with reference to FIGS. **2****,** **3****,** and **4****.** FIG. **2** is a front view illustrating an example arrangement of main components of the meter panel unit **100** of this embodiment. FIG. 3 is a perspective view illustrating an example configuration of a wall surface part described below of the meter panel unit **100.** FIG. **4** is a front view illustrating an example configuration of a transparent cover described below of the meter panel unit **100.** These drawings illustrate an X-axis, a Y-axis, and a Z-axis that are orthogonal to one another for reference (right-handed coordinate system). In the present description, the positive direction of the Y axis is also referred to as "upward," and the negative direction thereof is also referred to as "downward." The positive direction of the X axis is also referred to as "rightward," and the negative direction thereof is also referred to as "leftward." The positive direction of the Z axis is also referred to as "forward," and the negative direction thereof is also referred to as "backward."

As illustrated in FIG. **2****,** the meter panel unit **100** includes a meter portion **10** having a first analog meter **11,** a second analog meter **12,** and a display element **13** provided between the first and second analog meters **11** and **12.** In the present description, a portion of the meter portion **10** of FIG. **2** that displays information is also referred to as a display surface side of the meter portion **10.**

The first analog meter **11** has a pointer **2A,** and the second analog meter **12** has pointers **2B** and **2C.** The pointer **2A** is supported in a manner that allows the pointer **2A** to revolve around the axis of rotation positioned near the center of the first analog meter **11.** The pointer **2A** indicates the engine speed by the direction in which the tip of the pointer **2A** is oriented, for example. The pointers **2B** and **2C** are supported in a manner that allows the pointers **2B** and **2C** to revolve around the respective axes of rotation located at different positions of the second analog meter **12.** The pointer **2B** indicates the remaining amount of fuel by the direction in which the tip of the pointer **2B** is oriented. The pointer **2C** indicates the temperature (water temperature) of engine-cooling water by the direction in which the tip of the pointer **2C** is oriented, for example. The pointers **2A, 2B,** and **2C** are driven by a drive part (movement) included in the meter portion **10.** The drive part receives an electrical signal indicating a sensor output such as the engine speed, the remaining amount of fuel, or the water temperature, and converts the electrical signal into mechanical movements for changing the orientations of the pointers **2A, 2B,** and **2C.** The drive part for each pointer **2A, 2B, 2C** has an actuator such as a stepping motor.

The display element **13** is a digital meter rather than an analog meter. The display element **13** is, for example, an active matrix display, such as a liquid crystal display panel or organic light emitting diode (OLED). The display element **13** has a large number of pixels two-dimensionally arranged in a display region, and provides display visible to the human eye by emitting light from the large number of pixels. In this embodiment, each pixel of the display element **13** includes R, G, and B subpixels, and therefore, the display element **13** is capable of displaying color images. Unlike analog meters, the display element **13** is capable of displaying numerals, letters, graphics, symbols, still images, or moving images having any appropriate sizes at any appropriate positions in the display region. Strictly speaking, numerals, letters, graphics, and symbols are a part of images (still images or moving images) displayed in the display region by the display element **13.** The display element **13** is also capable of apparently displaying an image similar to all or a portion of an analog meter having a pointer. In the case in which the display element **13** displays an image of an "analog meter," a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of the power of a motor, the state of charge of the battery, and the temperature of the battery, respectively.

The "analog meter" displayed by a display device such as the display element **13** is different from the first analog meter **11** and the second analog meter **12** in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion **10,** particularly information having high importance and requiring high visibility, is displayed using an analog meter having a three-dimensional structure.

An external shape of the meter portion **10** when the meter portion **10** is viewed from the front of the display surface side is a closed loop similar to an ellipse. The external shape of the meter portion **10** is not limited to such an example. The external shape of the meter portion **10** when the meter portion **10** is viewed from the front may have generally a rectangular shape, or a shape that is a combination of a straight line and a curved line. It should be noted that if the size in the horizontal direction (X-axis direction) of the meter portion **10** is increased, both end portions of the meter portion **10** are hidden by the spokes **222A** and **222B** as illustrated in FIG. **1B****,** and therefore, the visibility from the operator is likely to decrease. As described below, in the meter panel unit **100** of this embodiment, such a decrease in visibility can be reduced while information displayed by the meter portion **10** can be clearly presented to the operator.

The meter panel unit **100** further includes a wall surface part **20** fixed to the display surface side of the meter portion **10,** and a transparent cover **30** opposite the display surface of the meter portion **10.** Example configurations of the wall surface part **20** and the transparent cover **30** will be described below.

The wall surface part **20** surrounds the first analog meter **11,** the display element **13,** and the second analog meter **12** entirely along the peripheral edge of the meter portion **10.** The wall surface part **20** may, for example, be formed of a plastic (synthetic resin). The wall surface part **20** protrudes vertically (the positive direction of the Z axis) from the display surface of the meter portion **10.** The wall surface part **20** does not necessarily need to be perpendicular to the display surface of the meter portion **10,** and may be tilted from the Z axis. In the present disclosure, the distance between the display surface of the meter portion **10** and an end on the front side of the wall surface part **20** is referred to as a "height" of the wall surface part **20.** As described below, in this embodiment, the height of the wall surface part **20** is not uniform along the peripheral edge of the meter portion **10,** and may vary depending on the position on the peripheral edge.

In this embodiment, a rough shape of the wall surface part **20** when the wall surface part **20** is viewed from the front of the meter portion **10** is a closed loop such as an ellipse. In such a region surrounded by the wall surface part **20,** or the inside of the wall surface part **20,** a single, continuous, three-dimensional space surrounded by the inner wall surface of the wall surface part **20** is formed.

As illustrated in FIG. **3****,** the wall surface part **20** has a portion having a relatively great height and a portion having a relatively small height. The portion having a relatively great height of the wall surface part **20** includes a visor region **20A.** At least the visor region **20A** of the wall surface part **20** has light-blocking properties. The visor region **20A** is arranged at a position above the display element **13** with the meter panel unit **100** attached to the work vehicle. The visor region **20A** of the wall surface part **20** serves as eaves to reduce a decrease in the display visibility of the meter portion **10** caused due to external light such as sunlight shining on the display element **13** or the like. A height (greatest height) **Ha** of the visor region **20A** is at least 20 mm, preferably at least 35 mm, and more preferably at least 40 mm. When the wall surface part **20** is viewed from the direction of the normal to the meter portion **10,** the visor region **20A** extends to the left and right across a range wider than the display element **13,** surrounding an upper half portion of each of the first analog meter **11** and the second analog meter **12.** The height of the visor region **20A** is greatest above the display element **13** and becomes smaller toward the left and right ends of the display element **13.**

The height of the wall surface part **20** is relatively small at a position close to the lower end of the meter portion **10.** The smallest height of the wall surface part **20** may, for example, be at most 5 mm, or may be 0 mm.

FIG. **3** also illustrates, in addition to the wall surface part **20,** other structural components that are integral with the wall surface part **20.** As described above, the wall surface part **20** may be made of a plastic, and therefore, the wall surface part **20** and other structural components can be produced simultaneously by a resin molding technique. Structural components other than the wall surface part **20** of FIG. **3** are described below.

As illustrated in FIG. 4, the transparent cover **30** has a front surface section **30A** including a concave surface **32,** and a side surface section **30B** extending from the peripheral edge of the front surface section **30A** along the outer side of the wall surface part **20.** The side surface section **30B** of the transparent cover **30** can cover the outer side of the wall surface part **20** along all the periphery thereof. The transparent cover **30** may, for example, be made of a colorless, transparent plastic (e.g., acrylic resin), or glass. In this embodiment, the front surface section **30A** and the side surface section **30B** of the transparent cover **30** are integrally formed together.

When the transparent cover **30** is viewed from the direction of the normal to the meter portion **10** with the meter panel unit **100** attached to the work vehicle, the front surface section **30A** of the transparent cover **30** is preferably tilted forward toward the operator. In the case in which the front surface section **30A** is tilted forward, when the operator sees the meter portion **10** through the transparent cover **30,** the operator's face and the background behind the operator are less likely to be reflected on the transparent cover **30.**

Because the front surface section **30A** of the transparent cover **30** has the concave surface **32,** when the operator sees the meter portion **10** through the transparent cover **30,** enlarged images of the operator and the background reflected by the transparent cover **30** are seen by the operator. This is because concave surface reflection occurs due to the front surface section **30A** of the transparent cover **30.** When information displayed by the meter portion **10** is represented by relatively small numerals, letters, graphics, or the like, the visibility of displayed information decreases as the spatial frequency of reflections on the transparent cover **30** decreases. According to this embodiment, such a decrease in visibility can be reduced.

The curvature ρ of the concave surface **32** of the transparent cover **30** is preferably uniform in each of the horizontal direction (the X-axis direction or the left-right direction) and the vertical direction (the Y-axis direction or the top-bottom direction). The curvature ρ determines the factor of magnification of a viewed image. As the curvature ρ is more uniform irrespective of direction, the concave surface **32** is closer to a portion of a sphere, and therefore, an enlarged image having a natural ratio is seen. It should be noted that the front surface section **30A** does not necessarily need to have a concave surface. For example, in the case in which the front surface section **30A** of the transparent cover **30** is covered with anti-reflection film, it is no longer to address reflections, and therefore, the front surface section **30A** may be a flat surface or a convex surface.

The side surface section **30B** of the transparent cover **30** extends along the outer side of the wall surface part **20.** Therefore, the side surface section **30B** has a height corresponding to the height of the wall surface part **20.** For example, the height of a portion of the side surface section **30B** of the transparent cover **30** that covers the visor region **20A** of the wall surface part **20** is greater than that of the other portion. A space delimited by the front surface section **30A** and the side surface section **30B** of the transparent cover **30** is referred to as an "inner space" of the transparent cover **30.** The shape and size of the inner space of the transparent cover **30** are great enough to accommodate substantially the entirety of the wall surface part **20.** As described above, a single, continuous, three-dimensional space surrounded by the inner wall surface of the wall surface part **20** is formed inside the wall surface part **20.** A front side of this three-dimensional space is delimited and blocked by the transparent cover **30.** The outer side of the wall surface part **20** may be in contact with the inner side of the side surface section **30B** of the transparent cover **30,** or a space may be provided therebetween.

It should be noted that condensation of water vapor existing in the "inner space" is likely to occur to fog the transparent cover **30.** In order to prevent such fogging, the surface of the transparent cover **30** may be coated with an antifogging agent. Alternatively, an antifogging effect can be obtained by providing a small opening in a portion of the meter portion **10** so that the inner space is in fluid communication with the outside. It should be noted that the transparent cover **30** does not need to be entirely transparent. For example, the side surface section **30B** does not need to be transparent.

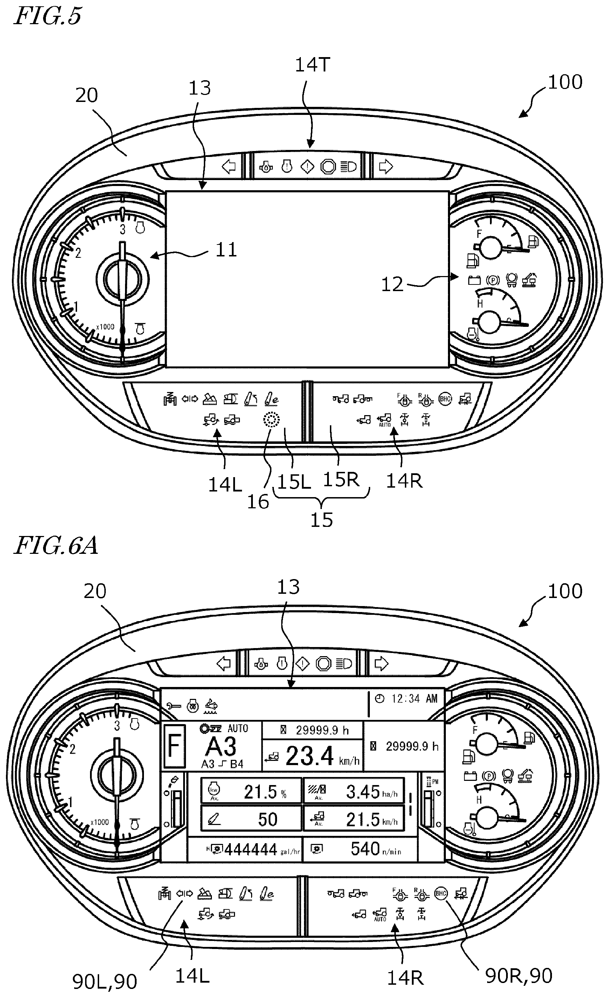

Next, an indicator region of the meter portion **10** will be described with reference to FIG. **5****.** In the example of FIG. **5****,** the meter portion **10** has an indicator region **14T** provided above the display element **13,** and indicator regions **14L** and **14R** provided below the display element **13.** Various indicators are provided in each of the indicator regions **14T, 14L,** and **14R.** Each indicator presents predetermined information such as warning when a light emitting device such as a light emitting diode (LED) behind the indicator is on.

The indicator regions **14T, 14L,** and **14R** are each provided at a position where the indicator regions **14T, 14L,** and **14R** can be seen through between the spoke **222A** and the spoke **222B** as illustrated in FIG. **1B****.** However, because the horn cover **221** is provided at the center of the steering wheel **220,** the horn cover **221** may prevent a central portion of a region positioned directly below the display element **13** from being seen. More specifically, the rough outer shape of the horn cover **221** of the steering wheel **220** when the meter portion **10** is viewed by the operator from the front is typically circular or close to circular. Therefore, in the vicinity of the lower end of the meter portion **10,** when a portion of the meter portion **10** closer to the center of the lower end is viewed from the operator, that portion is more likely to be hidden by the horn cover **221.** In this embodiment, the two separate left and right indicator regions **14L** and **14R** are arranged below the display element **13,** and therefore, the horn cover **221** of the steering wheel **220** is less likely to decrease the visibility. In addition, in this embodiment, an empty region **15** is provided which extends across the boundary between the indicator regions **14L** and **14R.** The empty region **15** includes empty regions **15L** and **15R.** In the left indicator region **14L,** indicators are relatively concentrated on a left side, and the first empty region **15L** is provided at a position close to the right end. In contrast to this, in the right indicator region **14R,** indicators are relatively concentrated on a right side, and the second empty region **15R** is provided at a position close to the left end. The first empty region **15L** and the second empty region **15R** are more likely to be hidden by the horn cover **221** of the steering wheel **220** and therefore is less likely to be seen if the horn cover **221** is large. However, in this embodiment, indicators are not provided in the empty region **15,** and therefore, overlooking of indicators can be reduced.

An illuminance sensor **16** may be provided in at least one of the first empty region **15L** and the second empty region **15R.** The present inventors' study demonstrated that if the illuminance of the meter portion **10** is adjusted (adjustment of display luminance) by unitizing the illuminance sensor **16** provided in the empty region **15L, 15R,** the illuminance can be accurately detected without the influence of the brightness of an image displayed on the display element **13,** resulting in an appropriate display luminance. The illuminance sensor **16** arranged below the display element **13** is in the shade of the visor region **20A** of the wall surface part **20,** and therefore, is less likely to be directly illuminated by sunlight, and therefore, is capable of accurately detecting the illuminance, on which the lightness of an environment around the operator is appropriately reflected. In addition, if the illuminance sensor **16,** which does not need to be seen, is arranged in a region of the meter portion **10** that is not easily seen from the operator due to the horn cover **221'**s occlusion, instead of indicators, resulting in a contribution to efficient utilization of an empty space in the meter portion **10.** If a no-light-emitting region (e.g., the empty regions **15L** and **15R)** having a width of at least 5 mm is provided on either side of the illuminance sensor **16,** the influence of light emitted from indicators on the illuminance detection performed by the illuminance sensor 16 can be reduced.

In this embodiment, the brightness of a light emitting region of an arc-shaped indicator described below can be changed, depending on the output from the illuminance sensor 16. The brightness of the display element 13 can also be changed, depending on the output from the illuminance sensor 16.

Seeing the indicator region 14T, which is positioned above the display element 13, is less likely to be obstructed by the spokes **222A, 222B,** and **222C** of the steering wheel 220, compared to the other indicator regions **14L** and **14R.** Therefore, it is preferable that indicators for indicating particularly important information (information having a higher warning level) (e.g., indicators for indicating the on/off state of the illumination device, turn signals, and warnings to the operator) be selected from a large number of indicators and arranged in the indicator region **14T.** The "warning level" of information displayed by an indicator may, for example, be specified in the manual of the work vehicle. For example, information such as the abnormality or failure of the engine and the on/off state of the headlamp has a higher warning level.

As described below, a control device may be configured to perform automatic switching or luminance adjustment of the headlamp and work lamp of the work vehicle based on the illuminance detected by the illuminance sensor **16.**

Next, an example display of the display element **13** will be described with reference to FIG. **6A****.** In the example of FIG. **6A****,** the display region of the display element **13** is divided into several regions. In each region, an "image" showing information such as the gear ratio, travel speed, function performance display, or hour meter is displayed. The images include various kinds of information represented by letters, numerals, symbols, and the like. Various kinds of digital data may be indicated by different colors in order to increase the visibility. In particular, when the operator's attention should be attracted, display may be performed in which at least one of the positions, sizes, or colors of letters, numerals, or symbols are changed and emphasized. When such emphasized display is performed, sound or speech may be emitted from an audio device such as a loudspeaker.

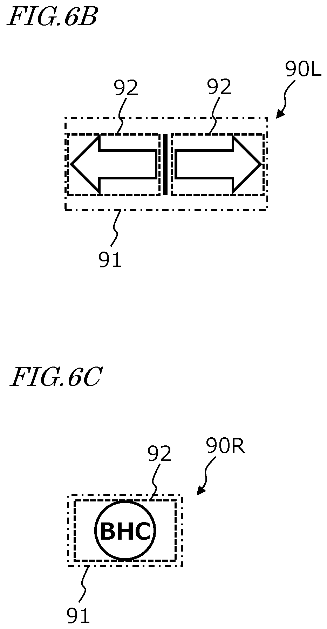

It should be noted that in this embodiment, as illustrated in FIG. **6B** or **6C****,** each indicator **90** of FIG. **6A** includes a light transmission region **91** having a shape specifying each characteristic graphic (including an icon and/or letters), and a light emitting device **92** arranged behind the light transmission region **91.** The indicator **90** may be turned on/off by the light emitting device **92** behind the indicator **90** being turned on/off. One or two light emitting devices **92** are arranged behind each indicator **90.** For example, as illustrated in FIG. **6B****,** in the indicator region **14L,** indicators to each of which two light emitting devices **92** are assigned may be arranged, and as illustrated in FIG. **6C****,** in the indicator region **14R,** indicators to each of which a single light emitting device **92** is assigned may be arranged. In this example, the indicator region **14L** includes a relatively large indicator **90L,** and the indicator region **14R** includes a relatively small indicator **90R.** In this case, two light emitting devices **92** may be arranged behind the relatively large indicator **90L,** and a single light emitting device **92** may be arranged behind the relatively small indicator **90R.** Such an arrangement is achieved even in the case in which the intervals at which the light emitting devices are arranged are invariable. To this end, a light transmission region for a relatively large indicator is formed, extending across two adjacent light emitting devices, and a light transmission region for a relatively small indicator is formed, extending across a single light emitting device. For indicators, graphics (icons) or letters having different sizes can be selectively used, and therefore, the visibility can be increased by enlarging an indicator having a higher warning level. In addition, if light emitting devices are equally spaced irrespective of the sizes of indicators, a base board on which light emitting devices are mounted (light emitting device base board) can be shared and utilized by various work vehicles.

### <Specific example configuration of meter panel unit>

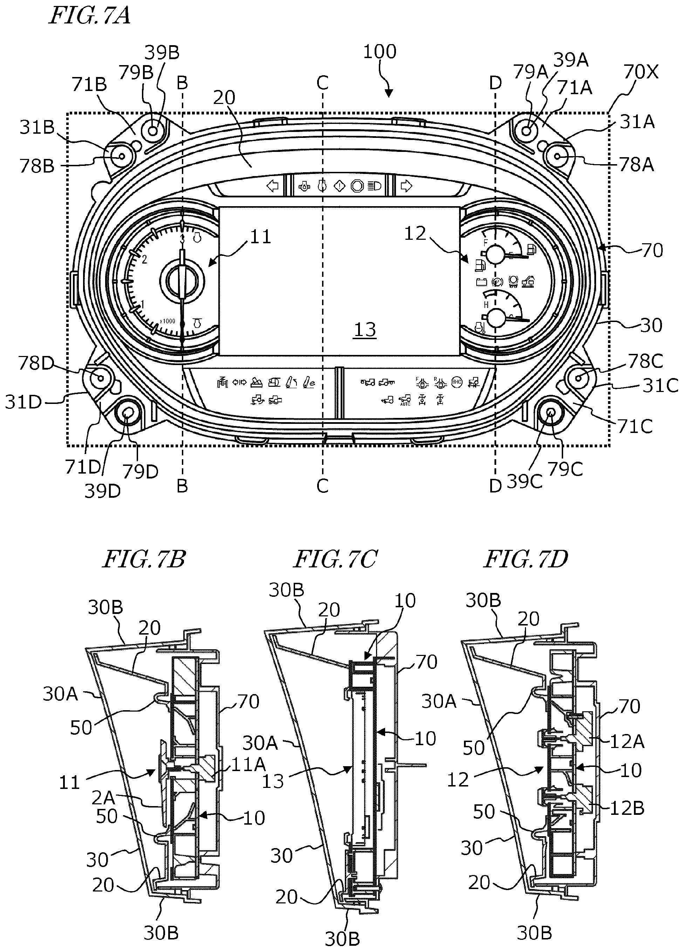

Next, an example configuration of the meter panel unit **100** will be described in more detail with reference to FIGS. **7A, 7B, 7C,** and **7D.** FIG. **7A** is a front view illustrating a detailed configuration of the meter panel unit **100** of this embodiment. FIGS. **7B, 7C,** and **7D** are cross-sectional views taken along line **B-B, C-C,** and **D-D,** respectively, of FIG. **7A****.**

As illustrated in FIGS. **7B** to **7D****,** the transparent cover **30** covers the wall surface part **20.** The transparent cover **30,** more specifically, the front surface section **30A** of the transparent cover **30,** is tilted forward toward the operator as viewed from the direction of the normal to the meter portion **10.** As described above with reference to FIG. **3****,** the visor region **20A** of the wall surface part **20** serves as eaves.

The side surface section **30B** of the transparent cover **30** is fixed to the meter portion **10.** More specifically, in this embodiment, the meter portion **10** is fixed to a rear cover **70** provided on the back surface side of the meter portion **10,** and the transparent cover **30** is fixed to the rear cover **70.** In the illustrated example, the rear cover **70** contains movable parts **11A, 12A,** and **12B** of the pointer **2A, 2B,** and **2C** of the meter portion **10.** The movable parts **11A, 12A,** and **12B** are electrically connected to various sensors or an electrical control unit (ECU) included in the work vehicle. Such electrical connection is established through a wiring cable that is connected to an electronic component included in the meter panel unit **100.** In the figures, the wiring cable is not illustrated.

As illustrated in FIG. **7A****,** the rear cover **70** of the meter panel unit **100** has four fixing sections **71A, 71B, 71C,** and **71D** for fixing the transparent cover **30** to the rear cover **70.** The fixing sections **71A, 71B, 71C,** and **71D** have bolt holes **79A, 79B, 79C,** and **79D,** respectively.

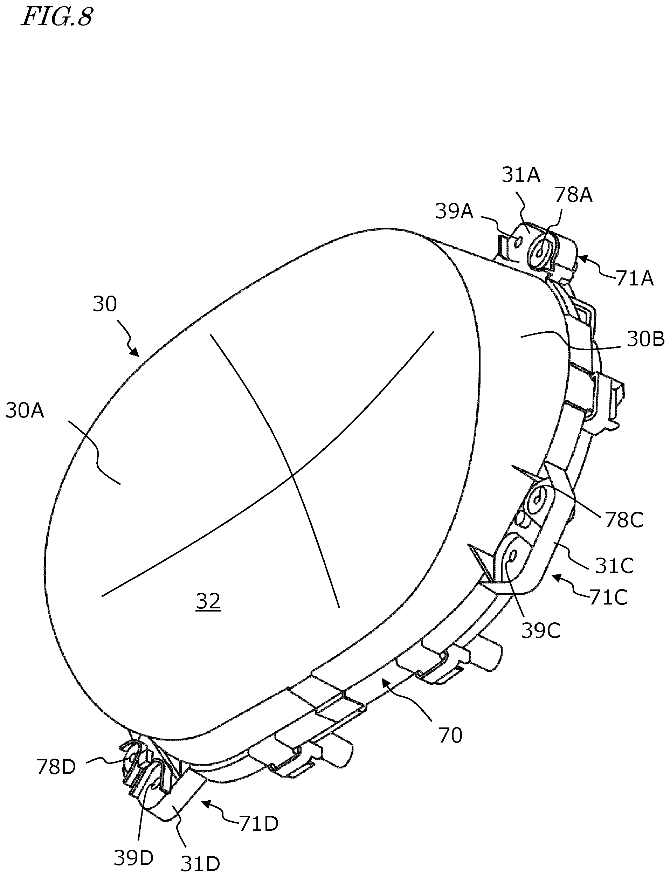

The transparent cover **30** has fixing section covers **31A, 31B, 31C,** and **31D** at positions corresponding to the fixing sections **71A, 71B, 71C,** and **71D.** FIG. **8** is a perspective view illustrating a state in which the transparent cover **30** is fixed to the rear cover **70** so as to cover the wall surface part **20** and the meter portion **10.** In this state, the fixing section covers **31A, 31B, 31C, 31D** of the transparent cover **30** are opposite the fixing sections **71A, 71B, 71C,** and **71D,** respectively, and cover the upper and side surfaces of the fixing sections **71A, 71B, 71C,** and **71D,** respectively. It should be noted that FIG. **8** does not illustrate the fixing section **71B** or the fixing section cover **31B.**

The fixing section covers **31A, 31B, 31C,** and **31D** of the transparent cover **30** have bolt holes **39A, 39B, 39C,** and **39D** that are opposite the bolt holes **79A, 79B, 79C,** and **79D** of the fixing sections **71A, 71B, 71C,** and **71D,** respectively. Each pair of opposite bolt holes is fastened by a bolt, so that the transparent cover **30** is fixed to the meter portion **10.**

It should be noted that not all the bolt holes **79A, 79B, 79C,** and **79D** need to have the same size and shape. In the example of FIG. **7A****,** the bolt hole **79D** has a size and shape different from those of the other bolt holes **79A, 79B,** and **79C.** Specifically, although the bolt hole **79D** has an elliptical shape as viewed from the front, the other bolt holes **79A, 79B,** and **79C** have a circular shape. Although the bolt hole **79D** has a size larger than that of a bolt used for linkage in a predetermined direction, the other bolt holes **79A, 79B, 79C** are adapted to the size of a bolt. Because the bolt hole **79D** thus has a size larger than that of a bolt, dimension deviations (dimension errors) can be accommodated when the transparent cover **30** is attached to the rear cover **70.**

As illustrated in FIG. **7A****,** the meter portion **10,** which includes the fixing sections **71A, 71B, 71C,** and **71D,** is entirely contained in a rectangular region **70X.** The rectangular region **70X** corresponds to a circumscribed rectangle that touches the outer shape of the meter panel unit **100.** The fixing sections **71A, 71B, 71C,** and **71D** protrude from the body of the rear cover **70** toward the four respective corners of the rectangular region **70.** In the case in which the housing of the meter portion **10** is produced by resin molding, as the size of the rectangular region **70X** for containing the entire meter portion **10** increases, the manufacturing cost of the mold increases. In this embodiment, the positions of the fixing sections **71A, 71B, 71C,** and **71D** are close to the four corners of the rectangular region **70X,** and therefore, the manufacturing cost of the mold involved in the resin molding can be reduced.

It should be noted that the fixing sections **71A, 71B, 71C,** and **71D** have fastening holes **78A, 78B, 78C,** and **78D,** respectively, for a decorative ring. The decorative ring is described below.

### <Communication ring and facing plate>

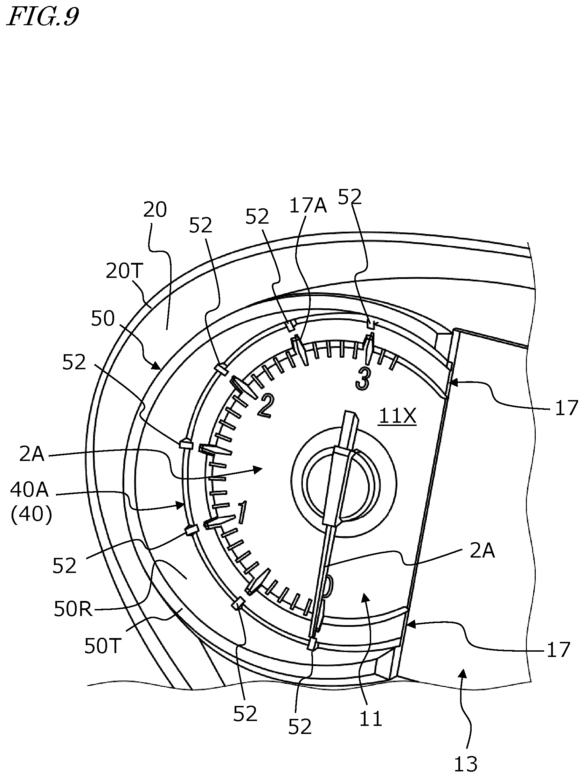

Next, an arc-shaped indicator (C-shaped communication ring) and a facing plate will be described with reference to FIGS. **9** to **12****.**

In this embodiment, the meter panel unit **100** includes a first arc-shaped indicator (communication ring) **40A** arranged around a sweep range **11X** of the pointer **2A,** and a second arc-shaped indicator **40B** arranged around sweep ranges of the pointers **2B** and **2C.** In the present disclosure, the term "arc" means a portion of a circle (circumference). The circle is not limited to a "perfect circle," and may include a portion whose curvature is gradually or locally changed like a portion of an ellipse.

The structure of the first arc-shaped indicator **40A** and the structure of the second arc-shaped indicator **40B** are symmetrical about a vertical line, and therefore, are collectively referred to as arc-shaped indicators **40.** The arc-shaped indicators **40** will be described below using the first arc-shaped indicator (communication ring) **40A** as an example, for the sake of simplicity.

As illustrated in FIG. **9****,** the meter panel unit **100** of this embodiment includes a facing plate **50** positioned outward of the arc-shaped indicator **40.** The facing plate **50** is formed of the same material (plastic) as that for the wall surface part **20.** As illustrated in FIG. **3****,** the facing plate **50** is integral with the wall surface part **20.** The facing plate **50** is in the shape of roughly an arc as viewed from the front. A height of an upper end **50T** of the facing plate **50** varies continuously from an end **50A** on the upper side to an end **50B** on the lower side, and is greatest at a middle position. The facing plate **50** is a curved wall rising from the meter portion **10.** A height of the visor region **20A** of the wall surface part **20** from the meter portion **10** is greater than a height of the facing plate **50** from the meter portion **10.** In other words, the greatest height of the visor region **20A** from the meter portion **10** is greater than the greatest height of the facing plate **50** from the meter portion **10.**

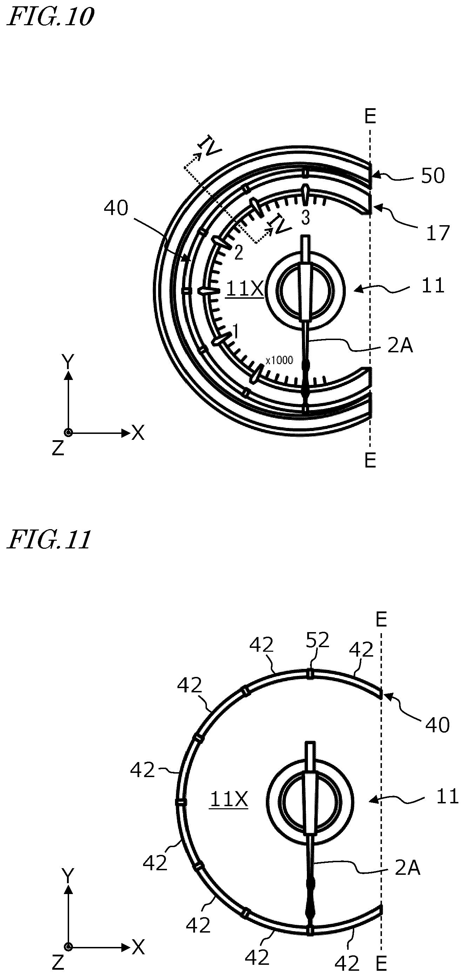

FIG. **10** is a front view illustrating a positional relationship between the first analog meter **11,** the arc-shaped indicator **40,** and the facing plate **50.** FIG. **11** is a front view mainly illustrating an example configuration of the arc-shaped indicator **40.** None of the first analog meter **11,** the arc-shaped indicator **40,** and the facing plate **50** extends rightward (the positive direction of the X axis) beyond a dashed line **E-E** of FIG. **10****.** The display element **13** is arranged rightward (in the positive direction of the X axis) of the dashed line **E-E.**

With such a configuration, while the length of the pointer **2A,** or the radius of the first analog meter **11,** is increased, an increase in the size in the horizontal direction (X-axis direction) of the first analog meter **11** can be reduced. This also holds true for the second analog meter **12.** It should be noted that as illustrated in FIG. **1B****,** when the size in the horizontal direction of the meter portion **10** is increased, the spokes **222A** and **222B** of the steering wheel **220** are more likely to obstruct seeing of the first and second analog meters **11** and **12.** Therefore, it is not preferable to increase the size in the horizontal direction of the meter portion **10.** In this embodiment, the analog meter is contained inside a shape surrounded by the dashed line **E-E** and an arc rather than a circle. Therefore, even for the meter portion **10,** which has a limited size in the horizontal direction, the size in the horizontal direction (X-axis direction) of the display element **13** can be increased while the visibility of the first and second analog meters **11** and **12** is increased. In addition, because the first and second analog meters **11** and **12** and the display element **13** are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator **40** (**40A**), which is arranged, surrounding the first analog meter **11,** be greater than 180° and smaller than 270°. If the central angle of the "arc" is at most 180°, the visibility of the first analog meter **11** decreases. If the central angle of the "arc" is at least 270°, the effect of reducing the size in the horizontal direction (X-axis direction) of the first analog meter **11** is not sufficient. This also holds true for the arc-shaped indicator **40** (**40B**) surrounding the second analog meter **12.** In terms of design properties, it is preferable that the left and right arc-shaped indicators **40A** and **40B** be positioned symmetrically about a vertical line passing through the center of the display element **13.**

The arc-shaped indicator **40** has at least one light emitting region **42** between the sweep range **11X** of the pointer **2A** and the facing plate **50.** In the example of FIG. **11****,** a plurality of light emitting regions **42** are provided. In this example, each light emitting region **42** has a fine curved shape extending along an arc. The plurality of light emitting regions **42** are arranged in a sequence of arcs to form the arc-shaped indicator **40.** In the case in which the number of light emitting regions **42** is one, a single light emitting region **42** has an arc shape.

In the example illustrated in the figure, the first analog meter **11** has an arc-shaped scale **17** between the arc-shaped indicator **40** and the sweep range **11X** of the pointer **2A.** The scale **17** has a three-dimensional shape protruding from the display surface (raised scale). The scale **17** is formed of a plastic integrally with the wall surface part **20** and the facing plate **50.** It should be noted that the scale **17** does not necessarily need to have a three-dimensional shape. The scale **17** desirably has a three-dimensional shape in terms of higher visibility.

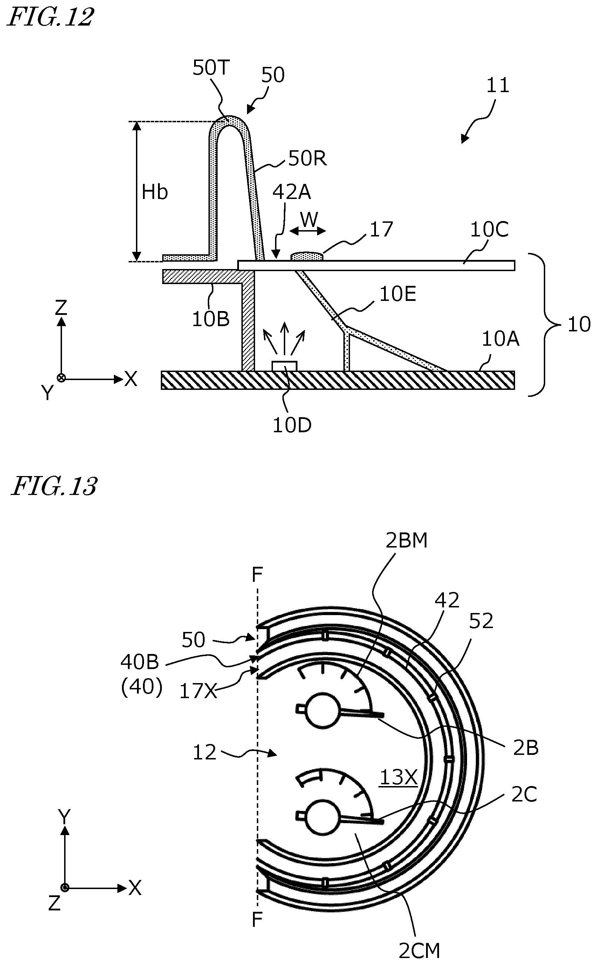

Although the plurality of light emitting regions **42** included in the arc-shaped indicator **40** may each include a light emitting element (e.g., an LED or OLED), in this embodiment the plurality of light emitting regions **42** are configured with a plurality of light transmission regions provided on the display surface of the meter portion **10** (i.e., the surface on the front side of the housing of the meter portion **10**) and at least one light emitting device arranged behind the plurality of light transmission regions. This feature will be described below with reference to FIG. **12.** FIG. **12** is a cross-sectional view taken along line **IV-IV** of FIG. **10****.**

In this embodiment, the body of the meter portion **10** has a base board **10A** and a support section **10B.** In the region of the first analog meter **11,** an opening is provided on the front side of the support section **10B.** The opening is closed by a meter dial **10C.** The meter dial **10C** is formed of a plastic having light transmission properties (e.g., polycarbonate), and has, at a surface thereof, a printed layer having letters, numerals, and patterns drawn in any color, white, or black. An end portion of the facing plate **50** and the raised scale **17** are positioned near an end portion of the meter dial **10C.** As illustrated in the cross-sectional view of FIG. **12****,** there is a space between the facing plate **50** and the raised scale **17,** and the space defines the light transmission region **42A.** A portion of the meter dial **10C** that serves as the light transmission region **42A** is configured to transmit light. On the back side (the side in the negative direction of the Z axis) of the light transmission region **42A,** at least one light emitting device **10D** is mounted on the base board **10A.** In addition to the light emitting device **10D,** other electronic components, and electronic components such as electronic circuits (including integrated circuit devices), may be mounted on the base board **10A.** These electronic components may be electrically connected through wiring on the base board **10A.**

The light transmission region **42A,** which transmits light emitted from the light emitting device **10D,** serves as the light emitting region **42** of the arc-shaped indicator **40.** The shape and size of each light emitting region **42** of the arc-shaped indicator **40** are determined by the shape and size of the corresponding light transmission region **42A.** The number of light emitting devices **10D** provided below each of the plurality of light transmission region **42A** or light emitting regions **42** is not limited to one, and may be plural. Alternatively, the plurality of light transmission regions **42A** may be provided so as to transmit light emitted from a single light emitting device **10D.**

The plurality of light emitting devices **10D** may include a plurality of LEDs that emit different colors. In the example of FIG. **12****,** a portion of light emitted from the light emitting device **10D** may be directly transmitted through the light transmission region **42A,** and the other portion of the light may be reflected by an optical member **10E** or the like. The optical member **10E** may be a diffusion plate, reflection plate, light guide plate, or multilayer structural component including these plates.

In this embodiment, the plurality of light emitting devices **10D** include an LED that emits red light, an LED that emits green light, and an LED that emits blue light. By causing these LEDs to selectively emit light, the arc-shaped indicator **40** can exhibit the function of notifying the operator of information using light having various colors. For example, all of the light emitting regions **42** of FIG. **11** can selectively emit red light, green light, and blue light. Alternatively, a light emitting device **10D** may be assigned to each of the plurality of light emitting regions **42,** and the plurality of light emitting devices **10D** may be caused to emit light separately, so that light beams can be sequentially emitted from the plurality of light emitting regions **42.**

In this embodiment, the facing plate **50** is positioned outward of the arc-shaped indicator **40,** and the inner surface of the facing plate **50** serves as a reflective surface **50R.** The reflective surface **50R** can reflect light emitted from the plurality of light emitting regions **42** toward the operator. The presence of the reflective surface **50R** improves the visibility of the arc-shaped indicator **40.** The reflective surface **50R** does not need to cause specular reflection, and may be a rough surface as long as the reflective surface **50R** can cause diffuse reflection.

A height **Hb** of the facing plate **50** from the meter portion **10** (see FIG. **12****)** is highest at a lateral position with respect to a middle portion **40C** of the arc-shaped indicator **40.** As illustrated in FIG. **3****,** the height **Hb** becomes smaller toward both ends **50A** and **50B** of the facing plate **50** along the arc-shaped indicator **40.** The greatest value of the height **Hb** is, for example, at least 30 mm. If the facing plate **50** thus configured is provided close to and outward of the arc-shaped indicator **40** (e.g., a space of at most 5 mm interposed therebetween), the visibility of the arc-shaped indicator **40** from the operator's position can be increased, and external light entering surroundings of the plurality of light emitting regions **42** of the arc-shaped indicator **40** can be reduced. Although the entrance of external light may decrease the display contract of the arc-shaped indicator **40,** not only the wall surface part **20** but also the facing plate **50,** which is provided closer thereto and has a great height, exhibit a light-blocking function. Such a double light-blocking function can reduce a decrease in the visibility of the arc-shaped indicator **40.**

It should be noted that the reason why the facing plate **50,** which has a great height, can be provided is that the size in the Z-axis direction of the three-dimensional space surrounded by the wall surface part **20** is sufficiently large. In this embodiment, in addition to the visor region **20A** of the wall surface part **20,** the facing plate **50,** which is provided on the left and right sides, has a great height. Therefore, the synergistic effect of both thereof effectively blocks external light from the surroundings, and therefore, the display of the display element **13** and the left and right arc-shaped indicators **40** can be lightly seen by the operator.

### <Raised scale >

Next, the raised scale **17** will be described. As illustrated in FIGS. **9** and **10****,** the raised scale **17** extends in the shape of an arc inside the arc-shaped indicator **40** to form generally a C-shape. As illustrated in FIGS. **3** and **9****,** the raised scale **17** has a plurality of notches **17A** arranged at predetermined intervals. The notch **17A** is a portion of the raised scale **17** whose width W illustrated in FIG. **12** is locally reduced. The position of the notch **14A** corresponds to the position of a scale that is to be indicated by the tip of the pointer **2A** in the first analog meter **11.** The presence of the three-dimensional notches **14A** facilitates reading of scales by the operator.

As illustrated in FIG. **9****,** the facing plate **50** has a plurality of protrusions **52** that protrude toward the sweep range **11X** of the pointer **2A**. The plurality of protrusions **52** are provided at the positions of the notches of the raised scale **17,** or in other words, positions aligned with the scales. Therefore, the notch **14A** of the raised scale **17** is recognized as a graphic integrated with the protrusion **52,** resulting in an improvement in the visibility of the scale. The plurality of protrusions **52** each extend across between the plurality of light emitting regions **42** of the arc-shaped indicator **40.** Therefore, the array of the plurality of light emitting regions **42** also corresponds to the array of the scales.

As can be seen from FIG. **3****,** the plurality of protrusions **52** serve as a bridge that connects the raised scale **17** to the facing plate **50.** The facing plate **50** is connected to the wall surface part **20.** In this embodiment, the wall surface part **20,** the facing plate **50,** and the raised scale **17** are integrally formed of a resin. The plurality of protrusions **52,** which extend from the facing plate **50,** delimit a boundary portion of the plurality of light emitting regions **42** in the arc-shaped indicator **40.** Even in the case in which the light transmission region **42A** of FIG. **12** has a single continuous arc shape, if the plurality of protrusions **52** extends across the light transmission region **42A** having such a shape, the plurality of light emitting regions **42** are formed.

In the case in which the wall surface part **20,** the facing plate **50,** and the raised scale **17** are integrally formed by resin molding using a mold, the plurality of protrusions **52** are configured from a resin positioned in a resin passage in a mold for molding. By providing the plurality of protrusion **52** arranged at predetermined intervals, a softened resin easily flows during molding, and therefore, the wall surface part **20,** the facing plate **50,** and the raised scale **17** can be easily integrally formed by resin molding.

Next, the second analog meter **12** and the second arc-shaped indicator **40B** will be described with reference to FIG. **13****.** The second arc-shaped indicator **40B** and the first arc-shaped indicator **40A** are symmetrical about a vertical line, and have substantially the same configuration. A facing plate (right facing plate) **50** is provided outward of the second arc-shaped indicator **40B**. The left facing plate **50** and the above facing plate (left facing plate) **50** are symmetrical about a vertical line.

Although an arc-shaped rib **14X** corresponding to the raised scale **17** is provided inside the second arc-shaped indicator **40B**, no notches are present in the arc-shaped rib **14X.** Protrusions (bridges) **52** are equally spaced and arranged between the arc-shaped rib **14X** and the right facing plate **50** so as to delimit a plurality of light emitting regions **42** included in the second arc-shaped indicator **40B.**

A sweep range **13X** of the second pointer **2B** and the third pointer **2C** is provided in a range surrounded by the second arc-shaped indicator **40B**. A rotational angle range **2BM** of the second pointer **2B** and a rotational angle range **2CM** of the third pointer **2C** have a similar or congruent outer shape. In the example of FIG. **3****,** the rotational angle range **2BM** of the second pointer **2B** and the rotational angle range **2CM** of the third pointer **2C** are vertically symmetric. The present disclosure is not limited to this. The rotational angle range **2BM** and the rotational angle range **2CM** may, for example, have such a shape and size that these ranges match each other when one of these ranges is translated in the vertical direction.

With such a configuration, scales can be intuitively read based on the movements of the second pointer **2B** and the third pointer **2C**, and are less likely to be erroneously read.

### <Information display system>

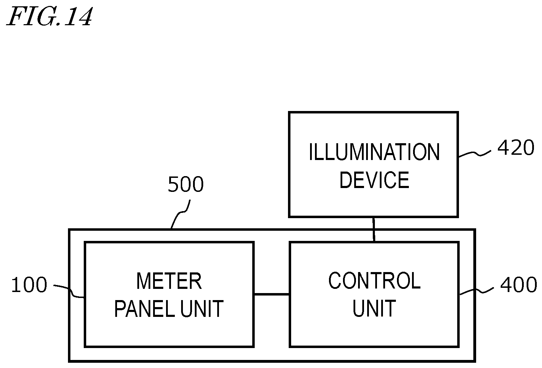

An information display system **500** according to an embodiment of the present disclosure will be described below with reference to FIGS. **14** to **16****.** The information display system **500** includes the above meter panel unit **100,** and a control device **400** that controls the meter panel unit **100.** The information display system **500** may be electrically connected to an illumination device **420** including the headlamp and work lamp of the work vehicle.

The control device **400** may cause the display element **13** to display a warning message that prompts the operator to turn off the headlamp and/or work lamp according to the output from the illuminance sensor **16.** For example, if the illuminance indicated by the output from the illuminance sensor **16** is at least a threshold, the control device **400** may cause the display element **13** to display a warning message that prompts the operator to turn off the headlamp and/or work lamp. As a result, it is possible to effectively prevent the illumination device **420** from being unnecessarily in the on state, resulting in a reduction in power consumption.

A portion of the functions of the control device **400** may be executed by the meter panel unit **100.** For example, all or a portion of the functions of the control device **400** may be executed by an integrated circuit device mounted on the base board **10A** of the meter portion **10.**

In the information display system **500** of this embodiment, the control device **400** is configured to cause the display element **13** to display various kinds of information after causing the arc-shaped indicator **40** to display information at vehicle startup. This allows information that the operator should know in the first place to be presented to the operator with higher priority at vehicle startup. Such information has information indicating a state (a state classified as abnormality in traveling or working) of the work vehicle. The control device **400** is also configured to change the color of emitted light according to contents of information. For example, the control device **400** may be configured to emit blue light from the arc-shaped indicator **40** when abnormality does not arise during starting, and to emit red light indicating abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or read, and may be green.

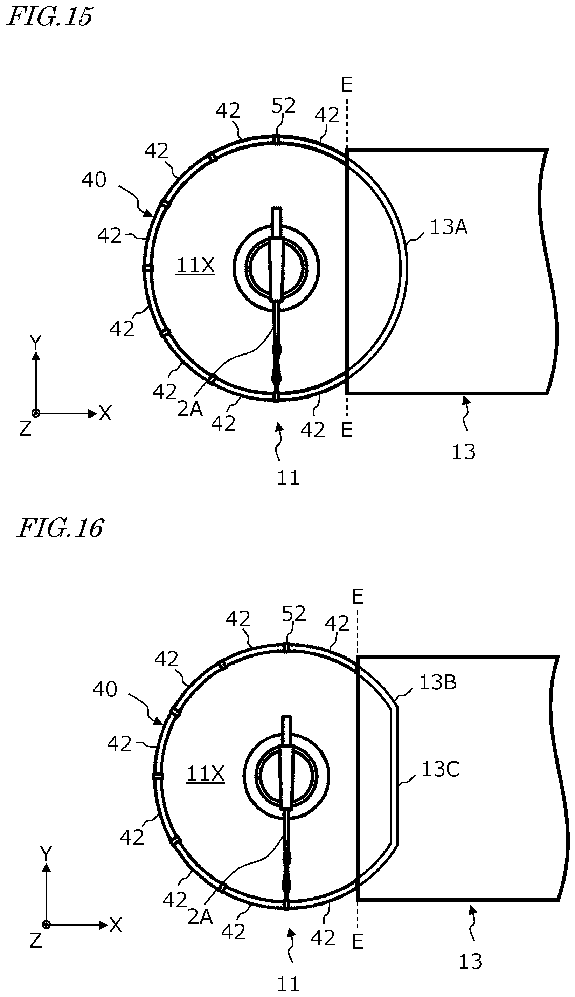

Furthermore, in this embodiment, the control device **400** is configured to cause the display element **13** to display a curved line-shaped image positioned on an extension line of the arc. FIG. **15** is a front view schematically illustrating an example in which an arc **13A** having the same color as that of light emitted from the light emitting region **42** of the arc-shaped indicator **40** is displayed. In FIG. **15****,** as an example, an arc **13A** having the same center as that of the arc of the arc-shaped indicator **40** is displayed. FIG. **16** is a front view schematically illustrating an example in which an arc **13B** having the same color as that of light emitted from the light emitting region **42** of the arc-shaped indicator **40,** and a second object **13C** having another shape and having an arc having the same color, are displayed. In the example of FIG. **16****,** the second object **13C** is a straight line portion. The control device **400** causes the display element **13** to display the concentric arc **13B**, and the straight line portion connected to the arc **13B**. The straight line portion extends in parallel with a straight line forming the boundary between the first analog meter **11** and the display element **14** (corresponding to a dashed line **E-E** of FIG. **16****).** By providing such display, a portion of the circle surrounding the first analog meter **11** that is cut away by the dashed line **E-E** is seen as a portion of the first analog meter **11** by the operator, and therefore, the operator can feel that the first analog meter **11** is large. In addition, an image that is displayed as if the image were a portion of the first analog meter **11** may be partially hidden by information such as numerals or letters displayed on the display element **13.** The display element **13** may display more important information in a greater size or closer to the operator with higher priority.

The control device **400** can cause the display element **13** to display various images, which are not limited to the examples of FIGS. **15** and **16****,** in association with light emitted from the light emitting region **42** of the arc-shaped indicator **40.** The control device **400** can also cause the display element **13** to display various images in synchronization with the flickering of the light emitting region **42** of the arc-shaped indicator **40.** What is intended by the display of the arc-shaped indicator **40** to notify the operation can be more easily understood by the operator by emphasizing that display and the display of the display element **13** or associating these displays with each other.

### <Decorative ring>

An example decorative ring in this embodiment will be described with reference to FIGS. **7A****,** **8****,** and **17****.**

As described above, the fixing sections **71A, 71B, 71C,** and **71D** of the rear cover 70 have the fastening holes **78A, 78B, 78C,** and **78D,** respectively, for the decorative ring. The decorative ring is a member that is put on the transparent cover **30** when the transparent cover **30** is in a state illustrated in FIG. 8, and exhibits the function of enhancing the appearance in terms of design properties. FIG. **8** illustrates the three fastening holes **78A, 78C,** and **78D.**

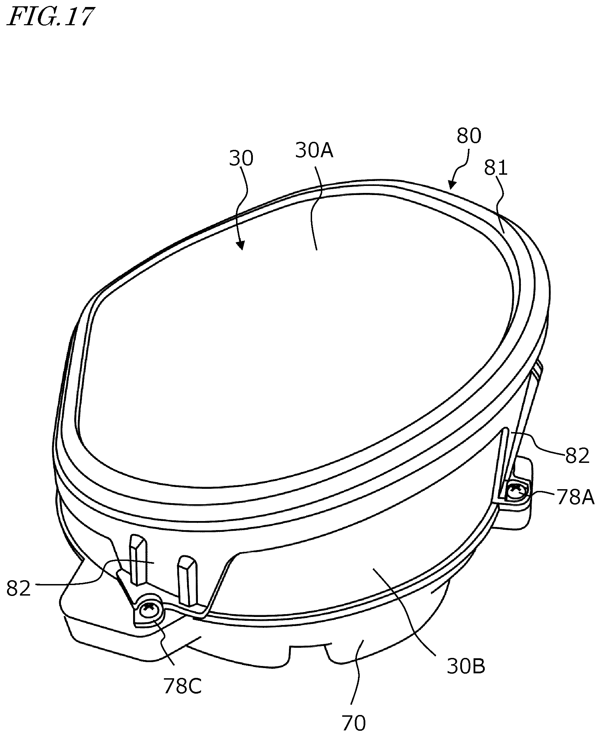

FIG. **17** is a perspective view schematically illustrating a state in which a decorative ring **80** is fixed to the rear cover **70** with the decorative ring **80** put on the transparent cover **30.** In this example, the decorative ring **80** may, for example, be formed of a resin material, and have a surface plated with a metal such as chromium. The decorative ring **80** may be formed of a metal. The decorative ring **80** has a ring-shaped body **81,** and a plurality of support sections **82** extending from the ring-shaped body to the fixing sections **71A, 71B, 71C,** and **71D** of the rear cover **70.** The ring-shaped body **81** extends along an edge of the transparent cover **30,** and does not obstruct seeing of the panel section **10** through the transparent cover **30.**

The appearance of the ring-shaped body 81 of the decorative ring **80** including the shape, color, material, pattern, and the like may be determined in various forms according to the operator's preference or the type or grade of the work vehicle. The decorative ring **80** is not necessarily an essential part for the meter panel unit **100.** Therefore, the decorative ring **80** does not need to be fixed to the fixing sections **71A, 71B, 71C,** and **71D** of the rear cover **70.** When the decorative ring **80** is not fixed to the fixing sections **71A, 71B, 71C,** and **71D** of the rear cover **70,** no bolts or the like are inserted in the fastening holes **78A, 78B, 78C,** and **78D** for the decorative ring. If the meter panel unit **100** is equipped with the fastening holes **78A, 78B, 78C,** and **78D** in advance, the versatility of the meter panel unit **100** can be increased.

### <Back surface structure>

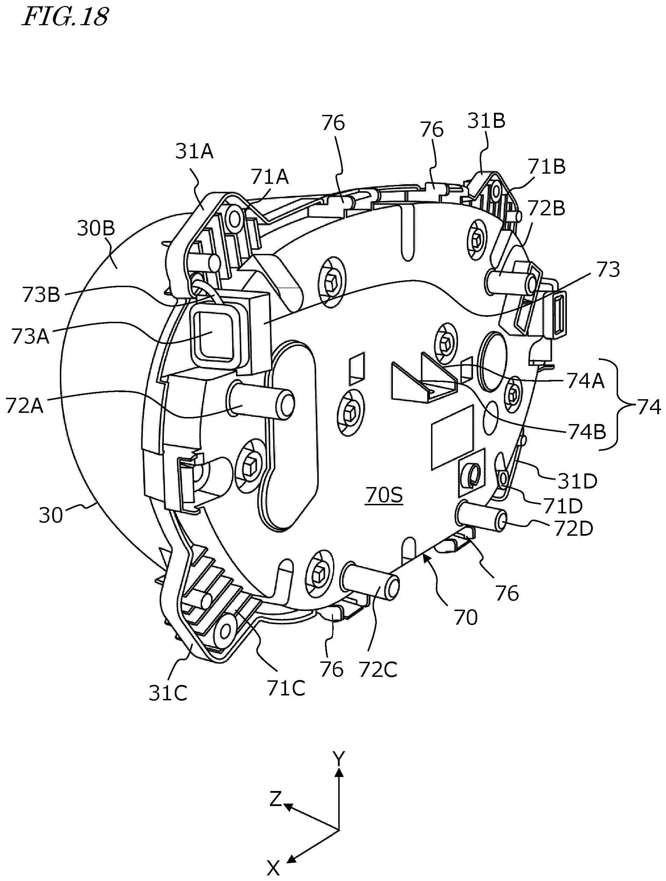

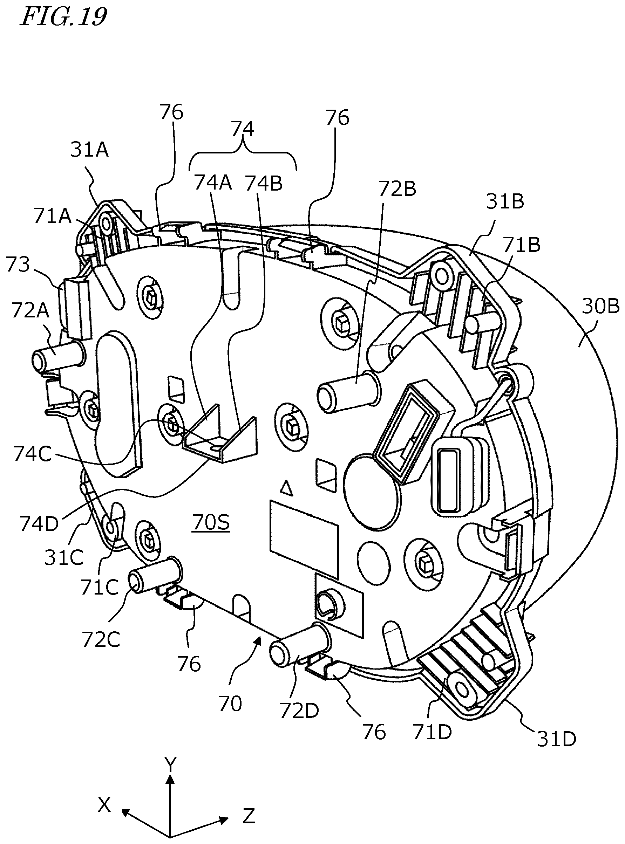

A back surface structure of the meter panel unit **100** of this embodiment will be described below with reference to FIGS. **18** and **19****.** FIG. **18** is a perspective view illustrating a back surface part of the meter panel unit **100.** FIG. **19** is another perspective view of the back surface part of the meter panel unit **100.**

As illustrated in FIGS. **7B** to **7D**, which have been described above, the meter panel unit **100** includes the rear cover **70,** which is positioned on the back surface side of the meter portion **10.** A structure of the rear cover **70** in this embodiment will be described below in detail.

Firstly, the rear cover **70** has at least one back surface connector **73** with a connection direction that is tilted from the normal direction (the Z-axis direction) of a surface **70S** of the rear cover **70.** As used herein, the term "tilted" is intended to encompass orthogonality. The surface **70** may partially have roughness. Although in the example of FIG. **18****,** the number of back surface connectors **73** is one, the number of back surface connectors **73** may be at least two. The connection direction of the back surface connector **73** of FIG. 18 is parallel with the X-axis direction. In other words, the connection direction of the back surface connector **73** is orthogonal to the normal direction of the surface **70S** of the rear cover **73.** The back surface connector **73** is, for example, a connector that is to be connected to a camera cable from an in-vehicle camera.

With such a configuration, for example, a camera cable can be easily connected to or removed from the back surface connector **73** with the meter panel unit **100** remaining attached to the work vehicle. Specifically, when the meter cover **240** of FIG. **1B** is detached with the meter panel unit **100** attached to the work vehicle, the back surface connector **73** can be accessed from an opened lateral space.

It should be noted that in the example of FIG. **18****,** when a certain cable is not connected to the back surface connector **73,** a connection portion of the back surface connector **73** is blocked with a rubber cap **73A**. The rubber cap **73A** is in the shape of a rib that is recessed the connection portion side with the rubber cap **73A** blocking the connection portion of the back surface connector **73.** The rear cover **70** is provided with a retention tether **73B** that flexibly connects the rubber cap **73A** to the rear cover **70** so as to prevent the rubber cap **73A** from being lost. The retention tether **73B** is, for example, a rubber strap.

The retention tether **73B** may be fixed to a fitting portion at which the rear cover **70** is fitted with the transparent cover **40.** In the example of FIG. **18****,** the fixing section **71A** of the rear cover **70** is fitted with the fixing section cover **31A** of the transparent cover **40,** which functions as a fitting portion, to which the retention tether **73B** is fixed.

The rear cover **70** has a binding section **74** for binding up a plurality of wire harnesses. In this example, the binding section **74** is positioned at a center of the rear cover **70.** The rear cover **70** and the binding section **74** are integrally formed of a resin material. More specifically, the binding section **74** has a pair of small plate pieces **74A** and **74B** protruding from the rear cover **70** in the normal direction (the Z-axis direction). The small plate pieces **74A** and **74B** are parallel with and opposite each other with a predetermined space interposed therebetween. The lower ends of the small plate pieces **74A** and **74B** are connected together by a bottom plate **74D** having a through hole **74C**. The through hole **74C** has a size large enough to allow a plurality of wire harnesses to pass therethrough. A plurality of wire harnesses can be bound with the binding section **74** by being passed through the through hole **74C.** This can prevent a plurality of wire harnesses from obstructing maintenance work, for example. The upper ends of the small plate pieces **74A** and **74B** are tilted from the normal direction of the surface **70** of the rear cover **70,** so that a height (size in the Y-axis direction) of the small plate piece **74A, 74B** decreases as one proceeds away from the surface **70** of the rear cover **70.** A height of the binding section **74,** or a height (size in the X-axis direction) of the small plate piece **74A, 74B,** is 20 to 50 mm, for example.

The rear cover **70** has a plurality of protrusions **76** configured to be fitted with a member that the meter panel unit **100** is to be attached. In the example of FIGS. **18** and **19****,** two protrusions **76** are provided at each of an upper and a lower portion of the rear cover **70.** It should be noted that the positions and number of protrusions are not limited to this. Each protrusion **76** has a protruding portion (fitting lug). The meter panel unit **100** can be fixed to the meter cover **240** of FIG. **1B** by the protruding portions of the protrusions **76** fitting into recessed portions (holes to be fitted with the fitting lugs) that are provided in the meter cover **240** and match the shape of the protruding portion.

The rear cover **70** also has at least three, preferably four protrusions **72A, 72B, 72C,** and **72D** that protrude from the surface **70S**. The tips of the protrusions **72A, 72B, 72C,** and **72D** are positioned on the same plane (imaginary plane). The protrusions **72A, 72B, 72C,** and **72D** are arranged so as to form a predetermined space between such a plane and the surface **70S** of the rear cover **70.**

A height (size in the X-axis direction) of each of the protrusions **72A, 72B, 72C,** and **72D** is, for example, 25 mm to 60 mm. Each of the protrusions **72A, 72B, 72C,** and **72D** may be positioned at a distance within the range of, for example, at least 100 mm, preferably at least 120 mm, from the center of the surface **70S** of the back surface connector **73.**

The rear cover **70** and the protrusions **72A, 72B, 72C,** and **72D** are integrally formed of, for example, a resin material. The height of the above predetermined space formed between the same plane on which the tips of the protrusions **72A, 72B, 72C,** and **72D** are positioned and the surface of **70S** of the rear cover **70** is greater than the heights of all protruding portions provided on the surface **70S** such as the binding section **74** and the back surface connector **73.** Therefore, for example, the meter panel unit **100** can, for example, be stably placed on a flat work bench by the protrusions **72A, 72B, 72C,** and **72D** without being interfered by the binding section **74** or the back surface connector **73.** As a result, it may be easy to perform work such as assembly, wiring, or maintenance.

### INDUSTRIAL APPLICABILITY

The technique of the present disclosure is widely applicable to various work vehicles that are used in smart agriculture.

### REFERENCE SIGNS LIST

- **10**: meter portion
- **11**: first analog meter
- **12**: second analog meter
- **13**: display element
- **14T**: indicator region
- **14L**: indicator region
- **14R**: indicator region
- **15L**: empty region
- **15R**: empty region
- **16**: illuminance sensor
- **17**: raised scale
- **20**: wall surface part
- **30**: transparent cover
- **30A**: front surface section of transparent cover
- **30B**: side surface section of transparent cover
- **40**: arc-shaped indicator
- **50**: facing plate
- **100**: meter panel unit

## Claims

1. An information display system comprising:
a meter panel unit for a work vehicle; and
a control device configured to control the meter panel unit,
wherein
the meter panel unit includes
a meter portion including a first analog meter and a second analog meter each including a pointer, and a display element provided between the first and second analog meters,
a wall surface part provided on a display surface side of the meter portion, and surrounding the first and second analog meters and the display element,
a transparent cover opposite a display surface of the meter portion, and
arc-shaped indicators positioned around sweep ranges of the respective pointers,
each of the arc-shaped indicators includes at least one light emitting region positioned in a shape of an arc, and
the control device causes the display element to display a curved line-shaped image on an extension line of the arc.

2. The information display system of claim 1, comprising:
facing plates positioned outward of the respective arc-shaped indicators.

3. The information display system of claim 1 or 2, wherein the control device causes the display element to display a curved line-shaped image on an extension line of the arc using light having a same color as that of light emitted from the plurality of light emitting regions.

4. The information display system of claim 1 or 2, wherein the control device is configured to synchronize changes in luminance of an image displayed on the display element with a flicker of light emitted from the light emitting region.

5. The information display system of claim 1 or 2, wherein
each of the arc-shaped indicators is provided on a respective one of both sides of the display element, and
the control device causes the display element to display a straight line portion connected to an arc with a same center as that of the arc and parallel with a straight line forming a boundary between the first analog meter and the display element and a straight line forming a boundary between the second analog meter and the display element.

6. A work vehicle comprising:
the information display system of any one of claim 1 or 2.

7. A meter panel unit for a work vehicle, comprising:
a meter portion including a first analog meter and a second analog meter each including a pointer, and a display element provided between the first and second analog meters;
a wall surface part provided on a display surface side of the meter portion, and surrounding the first and second analog meters and the display element;
a transparent cover opposite a display surface of the meter portion; and
an indicator region in which a plurality of indicators are positioned,
wherein
the plurality of indicators includes a group of indicators to each of which two light emitting devices are assigned.

8. The meter panel unit of claim 7, wherein
the indicator region includes two separate portions, and
the group of indicators is positioned in one of the two separate portions, and a second group of indicators to each of which a single light emitting device is assigned are positioned in the other separate portion.

9. The meter panel unit of claim 8, wherein the group of indicators includes an indicator with a relatively large size, and the second group of indicators includes an indicator with a relatively small size.

10. The meter panel unit of claim 7, further comprising:
an illuminance sensor provided below the display element.

11. The meter panel unit of claim 10, comprising:
arc-shaped indicators positioned around sweep ranges of the respective pointers; and
facing plates positioned outward of the respective arc-shaped indicators, wherein
each of the arc-shaped indicators includes at least one light emitting region positioned between the sweep range of the respective pointer and the respective facing plate, and
the meter panel unit is configured to change a brightness of the light emitting region of each of the arc-shaped indicators according to an output from the illuminance sensor.

12. The meter panel unit of claim 10, wherein the meter panel unit is configured to change a brightness of the display element according to an output from the illuminance sensor.

13. A work vehicle comprising:
the meter panel unit of any one of claims 10 to 12;
a headlamp; and
a control device configured to control an on/off state of the headlamp, wherein
the control device is configured to change a brightness of the headlamp according to an output from the illuminance sensor.

14. The work vehicle of claim 13, wherein the illuminance sensor is provided below the display element.

15. The work vehicle of claim 12 or 13, comprising:
a work lamp,
wherein
the control device is further configured to change the brightness of the work lamp according to the output from the illuminance sensor.

16. The work vehicle of claim 15, wherein the control device causes the display element to display a warning message to prompt an operator to turn off the headlamp and/or work lamp according to the output from the illuminance sensor.
